# EUROPEAN PATENT SPECIFICATION

(11) **EP 3 216 223 B1**
(45) Date of publication and mention of the grant of the patent: **23.01.2019**
(21) Application number: 15788510.4
(22) Date of filing: 15.10.2015
(51) Int. Cl.: H04N 21/24, H04N 21/41, H04N 21/414, H04N 21/462, H04N 21/45, H04N 21/258, H04N 21/436, H04N 21/4363

(54) **COLLABORATIVE DISTRIBUTED/UNSTRUCTURED SERVICE MANAGEMENT FRAMEWORK FOR WIRELESS-DISPLAY PLATFORM**
KOLLABORATIVER VERTEILTER/UNSTRUKTURIERTER DIENSTVERWALTUNGSRAHMEN FÜR DRAHTLOSANZEIGEPLATTFORM
STRUCTURE DE GESTION DE SERVICE COLLABORATIVE DISTRIBUÉE/ NON STRUCTURÉES POUR PLATE-FORME À AFFICHAGE SANS FIL

(30) Priority: 07.11.2014 US 201414535582
(43) Date of publication of application: 13.09.2017
(73) Proprietor: Qualcomm Incorporated, San Diego, CA 92121-1714 (US)
(72) Inventor: RABII, Khosro Mohammad, San Diego, California 92121-1714 (US); SUBRAMANIAM, Vijay, San Diego, California 92121-1714 (US); SHAUKAT, Fawad, San Diego, California 92121-1714 (US); BALASUBRAMANYAM, Shivakumar, San Diego, California 92121-1714 (US)
(74) Representative: Tomkins & Co
(86) International application number: PCT/US2015/055676
(87) International publication number: WO 2016/073158

(56) References cited:
- EP-A1- 2 341 715
- WO-A1-02/09106
- WO-A1-2013/040249
- WO-A2-03/096669
- US-A1- 2006 190 974
- US-A1- 2012 304 233
- US-A1- 2013 024 880
- US-A1- 2014 108 614
- US-A1- 2014 143 814
- US-A1- 2014 282 780
- US-B2- 8 429 299

## Description

### BACKGROUND

Conventional wireless media delivery platforms (e.g., Miracast Revision-1, Apple AirPlay®, Wi-Di, etc.) are largely conceived to wirelessly mimic high definition multimedia interface (HDMI) media streams using moving picture experts group (MPEG) transport streams. For example, a user may push a button on a smartphone to wirelessly project streaming MPEG format imagery onto a nearby connected monitor. Some wireless media delivery techniques utilize "one-to-many" service models in which a service provider device transmits data to a plurality of support devices and vice versa. Service management used in conventional wireless media delivery platforms commonly uses a separate entity (or a third device) for registration of services between devices (e.g., Jini's Service-Lookup, UPnP's Control-Point, etc.). For example, systems that utilize Digital Living Network Alliance (DLNA) functionalities may require a broker device that maintains a service registry for connecting a smart TV device to a tablet device in a home or business-place gateway. Devices associated with services are assigned constant roles in services, such as peer-to-peer (P2P) group owners or source/sink for screen-sharing or similar services. Much like HDMI, wireless media delivery platforms utilize an initial negotiation between devices (e.g., at plug-time) that remains static. In addition to constraints from P2P connections, such limited service discovery at connection time limits scalable frameworks for wireless media delivery devices and services. Further, application management may not be adaptively supported, as typical techniques simply connect devices via predefined services/contexts.

WO03096669 discloses a method and apparatus for browsing using multiple coordinated device and EP2341715 discuses audiovisual multi-room support.

### SUMMARY

Various embodiments, the features of which are set out in the appended claims, provide methods, devices, systems, and non-transitory process-readable storage media for establishing and managing MPEG services within a wireless-display media-streaming platform. An embodiment method performed by a processor of a MPEG service management mobile device may include storing a service registry that defines a plurality of service provider devices, a plurality of service consumer devices, and device capabilities required for a plurality of MPEG services, discovering a first set of currently available devices that includes service provider devices and service consumer devices, identifying a first available MPEG service of the plurality of MPEG services based on the first set of currently available devices, and generating a first MPEG service descriptor associated with the identified first available MPEG service. In some embodiments, the method may further include discovering a second set of currently available devices, identifying a second available MPEG service of the plurality of MPEG services based on the second set of currently available devices, and generating a second MPEG service descriptor associated with the identified second available MPEG service. In some embodiments, the method may further include transmitting a first message that instructs a service provider device associated with the identified first available MPEG service to provide a MPEG transfer stream using the generated first MPEG service descriptor associated with the identified first available MPEG service, and transmitting a second message that instructs a service consumer device to receive the MPEG transfer stream using the generated first MPEG service descriptor associated with the identified first available MPEG service.

In some embodiments, the method may further include updating the stored service registry based on the first set of currently available devices. In some embodiments, the method may further include launching an application associated with the identified first available MPEG service. In some embodiments, the method may further include transmitting an MPEG transfer stream using the generated first
MPEG service descriptor. In some embodiments, the method may further include receiving an MPEG transfer stream using the generated first MPEG service descriptor, and rendering the MPEG transfer stream.

In some embodiments, the service registry may also define a condition required for each of the plurality of MPEG services to be available, discovering the first set of currently available devices may include discovering the first set of currently available devices and a first condition, and identifying the first available MPEG service of the plurality of MPEG services based on the first set of currently available devices may include identifying the first available MPEG service of the plurality of MPEG services based on the first set of currently available devices and the first condition. In some embodiments, the first condition may be one or more of a network connectivity, a channel load, an available codec, and a device battery level.

In some embodiments, storing the service registry that defines the plurality of service provider devices, the plurality of service consumer devices, and the device capabilities required for the plurality of MPEG services may include registering the plurality of service provider devices and the plurality of service consumer devices in response to receiving registration requests from the plurality of service provider devices and the plurality of service consumer devices. In such embodiments the method may further include transmitting registration confirmations to the registered plurality of service provider devices and the registered plurality of service consumer devices. In some embodiments, the method may further include receiving a service preference for the first available MPEG service from a service consumer device, and adjusting a characteristic of the first available MPEG service based on the received service preference.

In some embodiments, the method may further include receiving a service request from a service consumer device for the first available MPEG service, and transmitting a message establishing the first available MPEG service associated with the first MPEG service descriptor for use by the service consumer device. In some embodiments, the method may further include receiving a de-registration request from a service consumer device, transmitting a de-registration confirmation to the service consumer device in response to receiving the de-registration request, and deconstructing the first available MPEG service in response to receiving the de-registration request.

Further embodiments include a mobile computing device (or mobile device) configured with processor-executable instructions for performing operations of the methods described above. Further embodiments include a non-transitory processor-readable medium on which is stored processor-executable instructions configured to cause a mobile computing device to perform operations of the methods described above. Further embodiments include a communication system including at least a mobile computing device configured with processor-executable instructions to perform operations of the methods described above.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIGS. 1-5 are system block diagrams illustrating communication systems including service provider devices and service consumer devices according to conventional wireless media delivery platform implementations.
FIG. 6 is a component block diagram illustrating an exemplary service architecture for a conventional media streaming platform.
FIG. 7 is a system block diagram illustrating an exemplary mobile device configured according to various embodiments to provide service management functionalities for use in an MPEG streaming environment.
FIG. 8 is a component block diagram illustrating an exemplary architecture for service management components in an MPEG service management mobile device suitable for use in various embodiments.
FIG. 9 is a system block diagram illustrating an embodiment collaborative, distributed, and unstructured service management architecture utilized by at least a MPEG service management mobile device and a service consumer device.
FIG. 10 is a system block diagram illustrating an embodiment collaborative, distributed, and unstructured service management architecture utilized by at least a MPEG service management mobile device, a service provider device, and a service consumer device.
FIG. 11A-11B are process flow diagrams illustrating embodiment methods for a MPEG service management mobile device to enable MPEG services within a wireless display platform.
FIGS. 11C-1 ID are diagrams illustrating exemplary scenarios for a MPEG service management mobile device to discover available services in various environments having devices suitable for use in wireless display platforms.
FIG. 12 is a diagram illustrating software architecture layers and operations of a sink device and a MPEG service management mobile device configured to utilize a service management platform according to various embodiments.
FIG. 13 is a process flow diagram illustrating an embodiment method for service management message processing by a MPEG service management mobile device.
FIG. 14 is a call flow diagram illustrating signaling between a MPEG service management mobile device and a sink device according to various embodiments.
FIG. 15 is a component block diagram of a mobile computing device suitable for use in various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The terms "mobile computing device" or "mobile device" or "computing device" are used herein to refer to any one or all of cellular telephones, smart-phones, web-pads, tablet computers, Internet enabled cellular telephones, Wi-Fi® enabled electronic devices, personal data assistants (PDA's), laptop computers, personal computers, and similar electronic devices equipped with at least a processor. In various embodiments, such devices may be configured with a transceiver to establish wireless connections, such as via a wide area network (WAN) or local area network (LAN) (e.g., an LTE, 3G or 4G wireless wide area network transceiver, a wired connection to the Internet, or Wi-Fi®).

The term "service platform" is used herein to refer to a collection of entities, devices, and/or functionalities assembled to enable MPEG capabilities of networked devices, such as media streaming. The terms "service" and "MPEG service" are used herein to refer to any content, resource, and/or functionality shared or performed by service platform entities. For example, a "Use-Case/Application" may be loosely viewed as an MPEG service.

The terms "service provider," "source," and "service provider device" are used herein to refer to a device (including a device module or functionality) that generates and/or produces MPEG services for consumption by other devices within a service platform, such as by transmitting a video MPEG stream via a Wi-Fi® Direct communication protocol. The terms "service consumer," "sink device," and "service consumer device" are used herein to refer to a device (including a device module or functionality) that utilizes MPEG services available within a service platform, such as by rendering MPEG video streams transmitted by a service provider device. The term "broker" or "agent" is used herein to refer to any device (including a device module, functionality, or application) within a service platform that acts on behalf of other entities, such as a device that acquires or establishes MPEG services for another device.

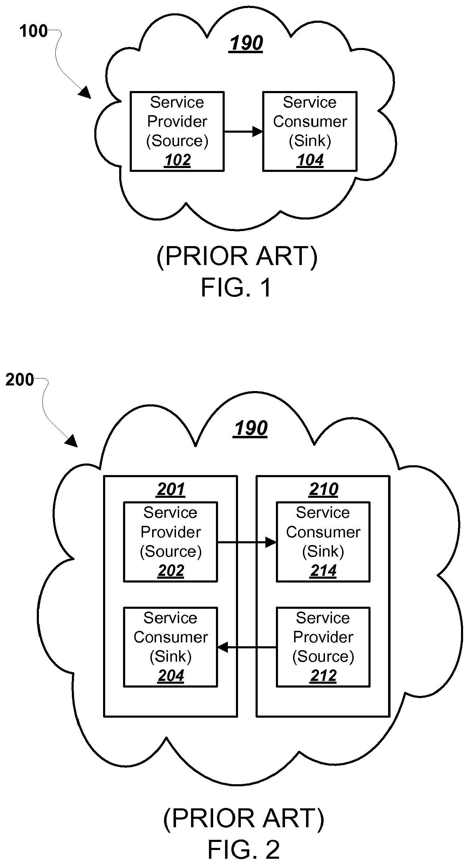

FIGS. 1-6 are described to provide a basic understanding of systems and devices typically used in conventional MPEG service platforms. FIG. 1 illustrates a simplified system 100 including a service provider device 102 and a service consumer device 104 that may be configured in a manner suitable for conventional wireless media delivery platform implementations (e.g., Miracast Revision-1, Apple AirPlay®, Wi-Di, etc.). The service provider device 102 and the service consumer device 104 may be connected via a Wi-Fi® local area network (LAN) 190 and/or via direct connections (e.g., Wi-Fi® Direct). In such a system 100, the devices 102, 104 maybe assigned constant (or static) roles, such as a "source" (e.g., a media outputting device) or a "sink" (e.g., a media receiving device), such as used in a screen-sharing service. For example, using a Miracast Revision-1 platform, the service provider device 102 (e.g., a desktop computer or laptop computer, etc.) may be statically identified as a device capable of outputting media streams for display on the service consumer device 104 (e.g., a television device). The functionalities associated with such roles may be enabled via various software, modules, units, applications, and/or other capabilities of the various devices 102, 104.

FIG. 2 illustrates another system 200 in which a first device 201 and a second device 210 may be configured in a manner suitable for conventional wireless media delivery platform implementations (e.g., Miracast Revision-1, Apple AirPlay®, Wi-Di, etc.). The devices 201, 210 may be connected via a Wi-Fi® LAN 190 and/or via direct connections (e.g., Wi-Fi® Direct). Such devices 201, 210 may be statically configured to perform both source and sink roles. In other words, the first device 201 may be configured to utilize service provider functionalities 202 and service consumer functionalities 204, and similarly the second device 210 may be configured to utilize service provider functionalities 212 and service consumer functionalities 214. Similar to the devices 102, 104 described above with reference to FIG. 1, the first device 201 and the second device 210 may be statically assigned their capabilities upon connecting to a wireless media delivery platform of the system 200 in order to enable peer-to-peer (P2P) exchanges of media streams.

The systems 100, 200 described with reference to FIGS. 1-2 may or may not require a central broker or registry device, such as a DLNA service management device, that is configured to enable data streams between devices on a LAN. For example, the system 200 of FIG. 2 may require a router, desktop computer, or media streaming agent device to store and update a database indicating the roles assigned to the first device 201 and the second device 210 upon their connection to a platform, such as when they are connected to the Wi-Fi® LAN 190. In other words, some conventional systems may require the use of a central gateway device not engaged in any data transfer to keep registration information that allows connections between a source device and a sink device for conducting the data transfer.

The connections in the systems 100, 200 illustrated FIGS. 1-2 may be similar to hard-wired connections between devices, such as HDMI cables. In the conventional platform implementations shown in FIGS. 1-2, the services available to or from the devices may be statically established or otherwise negotiated at the time the devices are associated with (or connected to) the platforms. In particular, roles and services may be established at "plug-in" time, remaining constant throughout the connection life of the devices. Thus, similar to HDMI connections, the connections of the systems 100, 200 may not be scalable to suit frequently changing (i.e., dynamic) conditions in the network and/or the devices.

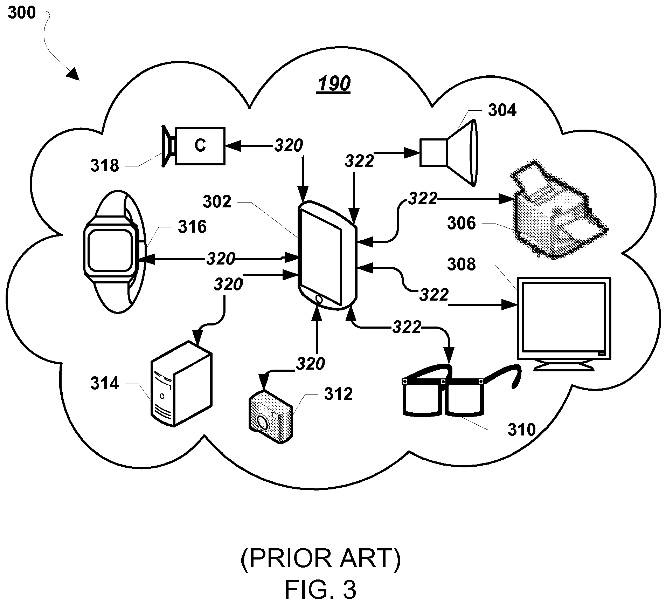

In some conventional wireless media delivery platforms, particularly platforms such as Miracast (i.e., Miracast Revision-1 or Miracast Revision-2) that utilize direct wireless connections between devices (e.g., Wi-Fi® Direct), devices may not be constrained to one-to-one exchanges of data streams, but instead may be capable of transmitting data to and/or receiving data from multiple other devices. For example, devices may use multiple P2P connections to enable complex media streaming applications. FIG. 3 illustrates an example of such a system 300 that includes various devices 302-318 connected to a Wi-Fi® LAN 190 and/or capable of utilizing Wi-Fi® communications. In this system 300, a single device may be configured as a service provider device to deliver services data to many service consumer devices as well as receive services data as a service consumer device from a plurality of service provider devices. For example, a smartphone mobile device 302, configured to operate as both a service provider device and a service consumer device, may receive MPEG streams via wireless connections 320 (e.g., Wi-Fi® Direct connections, connections over the LAN 190, etc.) from a video camera 318 (e.g., an Internet or web cam, etc.), a wearable device 316 (e.g., a smart watch, etc.), a personal or desktop computer 314, and/or a digital camera 312. Further, the smartphone mobile device 302 may transmit MPEG streams via wireless connections 322 (e.g., Wi-Fi® Direct connections, connections over the LAN 190, etc.) to a speaker device 304, a printer device 306, a monitor device 308, and/or a head-mounted display (HMD) device 310.

Although the smartphone mobile device 302 is shown in FIG. 3 to receive and transmit various streams to the devices 304-318, it should be appreciated that various devices 304-318 may be capable of performing a service provider device role and/or a service consumer device role. For example, a wearable device 316 may be capable of provide MPEG streams to the smartphone mobile device 302 (e.g., act as a source providing audio streams recorded at the smart watch, etc.) as well as receiving MPEG streams to render locally (e.g., act as a sink and render a video stream on the LED display of the smart watch, etc.). Although not shown in FIG. 3, the various devices 304-318 may also be capable of receiving MPEG streams from and/or transmitting MPEG streams to a plurality of devices concurrently, as shown for the smartphone mobile device 302. For example, the head-mounted display device 310 may be configured to receive a video stream from the video camera 318 and an audio stream from the smartphone mobile device 302.

With such one-to-many capabilities, Miracast and similar wireless media delivery platforms may provide inter-device connectivity that enables an entire service to be possible via a plurality of devices. For example, to render a movie, the smartphone mobile device 302 may provide a video MPEG stream to the head-mounted display device 310 and an audio MPEG stream to the speaker device 304. Such inter-device connectivity may not require a central gateway (e.g., a dedicated registry device that keeps registration information, etc.).

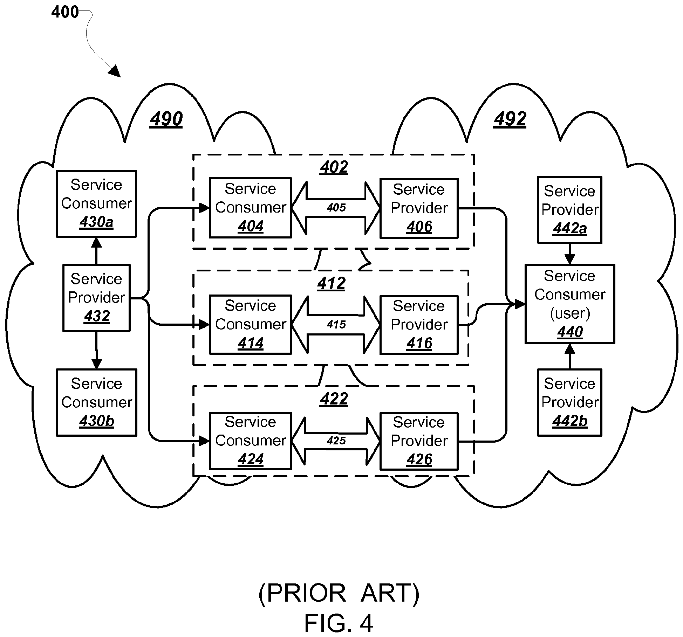

FIG. 4 illustrates another example of a conventional system 400 that includes various devices 402, 412, 422 capable of operating as both service consumer devices and service provider devices using more than one communication platform or network. In general, some devices may be configured to transfer data streams between various networks via packet-hopping techniques, such as by receiving a video MPEG stream from a first network for delivery to a second network. With such functionalities, wireless media delivery frameworks may grow or morph in an ad-hoc manner along with the participating devices (and their service capabilities). For example, the devices 402, 412, 422 may be connected to a first communication network 490 and a second communication network 492, such as a first Wi-Fi® local area network and a second Wi-Fi® local area network, a first personal area network and a second personal area network, and/or any combination of networks suitable for the delivery of MPEG media streams.

The devices 402, 412, 422 in such a system 400 may include service consumer functionalities 404, 414, 424 and service provider functionalities 406, 416, 426 that may be connected within the devices 402, 412, 422 via interconnects (and memory) 405, 415, 425. The service consumer functionalities 404, 414, 424 of the devices 402, 412, 422 may be capable of receiving data streams (or MPEG media streams) from a service provider device 432 associated with the first communication network 490, delivering the received data streams to their respective service provider functionalities 406, 416, 426 via their respective interconnects (and memory) 405, 415, 425. The service provider functionalities 406, 416, 426 may then transmit the received data streams to a service consumer device 440 associated with the second communication network 492.

The service consumer device 440 may also receive various other data streams and inputs from a plurality of other service provider devices associated with the second communication network 492, such as service provider devices 442a, 442b. The service provider device 432 may also be configured to deliver media streams to a plurality of other service consumer devices associated with the first communication network 490, such as service consumer devices 430a, 403b.

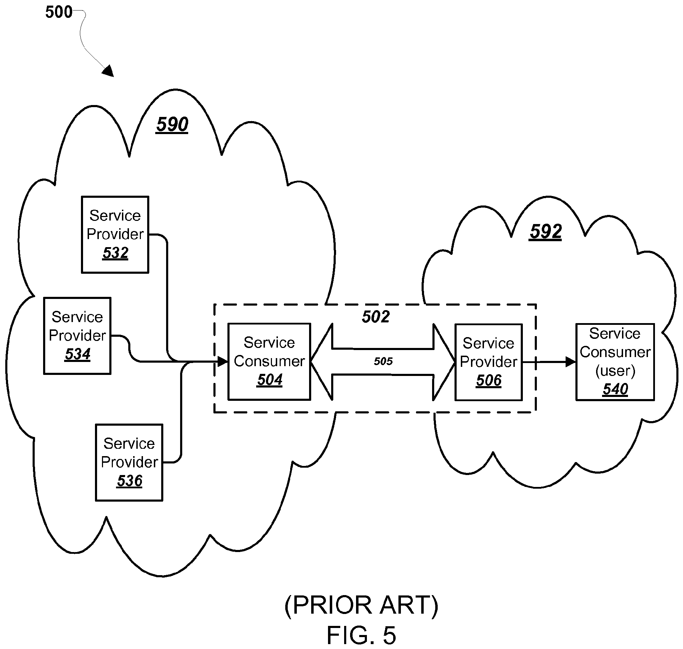

FIG. 5 illustrates another example of a conventional system 500 that includes a device 502 capable of operating as both a service consumer and a service provider using more than one communication platform or network. In other words, the device 502 may operate in a multi-network service environment or model. For example, the device 502 may use a service consumer functionality 504 with reference to a first network 590 for receiving data streams from a plurality of service provider devices 532-536, as well as using a service provider functionality 506 for relaying the data streams to a service consumer device associated with a second network 592, wherein the service consumer functionality 504 may be connected to the service provider functionality 506 via an interconnect 505. The device 502 may utilize networking techniques, such as Multi-Mode Wi-Fi® and multi-user, multiple-input and multiple-output (MU-MIMO), which amplify the need for packet forwarding and robust service discovery.

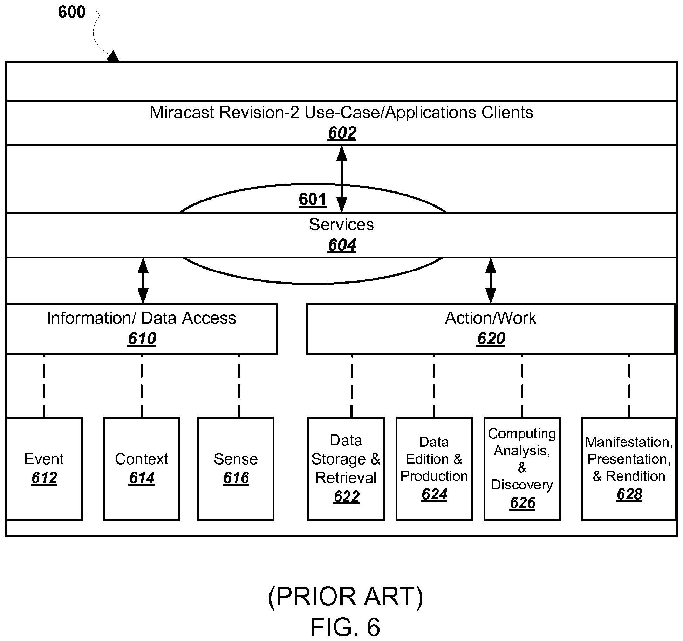

FIG. 6 illustrates an example of a service architecture for a conventional media streaming platform 600, such as Miracast (e.g., Miracast Revision-2). With such a service architecture (or data path), various devices can connect with one another in an ad-hoc fashion so that the devices may connect to a common network or otherwise become available for network communications with other devices. Such devices may operate independently and unaware of other devices, such as by operating in an "always on" mode. However, operational dependencies and required collaborations or connections between various devices accessing the platform 600 may be validated and resolved per a central functionality 601 (e.g., registry module, etc.). In other words, the central functionality 601 may determine and/or control the services 604 that may be utilized by applications (e.g., Miracast Revision-2 Use-Case/Applications Clients 602) utilized by devices associated with the platform 600. Current data describing the network and/or devices, such as event data 612, context data 614, and sense data 616, may be available to an information/data access functionality 610 that is utilized by the central functionality 601 for providing the services 604.

Devices connected to the platform 600 (e.g., service provider devices, service consumer devices, etc.) may have unequal capabilities, such as processing density, storage capacity, connectivity, power profile, etc. To address this, an action/work functionality 620 may be utilized by the central functionality 601 for providing the services 604. In particular, the action/work functionality 620 may be a part of the platform 600 that receives data regarding data storage and retrieval capabilities 622, data edition and production capabilities 624, computing analysis and discovery capabilities 626, and manifestation, presentation and rendition capabilities 628, making that data available to the central functionality 601 in order to provide services 604 to various applications/devices.

Various networking platforms, such as the exemplary platform 600 described above, may utilize conventional service discovery architectures, methods, functions, algorithms, and/or protocols to identify the services and networking opportunities that may be utilized by various devices at a given time. For example, service discovery functions may be used by a service consumer device to search for services that match required conditions for consuming media streams without prior configurations. One particular conventional service discovery technique is a "zero-configuration" (or "Zeroconf") service discovery protocol. This discovery technique resolves addressing, name, service discovery, automatic network configuration of devices and services across heterogeneous networks without requiring a centralized entity (e.g., a domain name system (DNS) server, a dynamic host configuration protocol (DHCP) server, etc.). Devices that support Zeroconf service discovery protocol may utilize Multicast DNS functionalities to store service information in DNS resource records within a local network. Further, such a service discovery protocol may utilize DNS Service Discovery (DNS-SD) to allow service consumer devices to use standard DNS programming interfaces, servers, and packet formats to browse an associated network to find available services.

Other exemplary conventional service discovery protocols/architectures/algorithms may include Universal Plug and Play (UPnP), "Service-Location-Protocol" from the Internet Engineering Task Force (IETF), Universal Description Discovery and Integration (UDDI) for Web services, DNS Service Discovery (DNS-SD) Simple Service Discovery Protocol (SSDP) as used in Microsoft's Universal-Plug-and-Play (UPnP®), Bluetooth Service-Discovery-Protocol, Sun's Java-based Jini for Java objects, Salutation, and multicast-Domain-Name-System (mDNS) as used in Apple's Zeroconf Bonjour®.

Conventional service discovery protocols may require various typical or standard mechanisms for enabling service discovery by devices, such as a publication mechanism that may expose the availability of a service to connected devices, a discovery mechanism that may enable those connected devices to browse available services, and a resolution mechanism that may translate service identifiers (e.g., names, nomenclature, etc.) to actual logical address and port numbers. The distributed nature of many media streaming platforms, such as Miracast, may require service discovery and management protocols, such as Zeroconf, in order to handle the supported, ad-hoc packet-hopping by devices.

The following are exemplary mechanisms that may be used in various platforms and service discovery protocols, such as Zeroconf. A discovery mechanism may include consumer and/or service provider devices advertising (or broadcasting) via discovery messages their identities and capabilities (e.g., service type, identifier, and pointer to more detailed information, etc.) for receipt by a central service manager (or control point device). A description mechanism may include a control point device reviewing received discovery messages (and their included messages descriptors) to learn new devices and their capabilities (e.g., embedded devices, associated (or provided) services, controls, states, etc.). A registration/registry mechanism may archive information about services and register/unregister devices (or users). An availability mechanism may be supported for enabling client applications and/or service brokers to periodically inquire about the availability of required services, such as by soliciting a registration-manager mechanism or device at a central service manager. A presentation mechanism may enable a device to present its controls and/or status by exposing a presentation location. A control mechanism may enable a central service manager, once it has obtained a description of a device, to send actions (i.e., control messages) to a service manager for the device which in turn may respond by returning action-specific values corresponding to the control message and the device. An "eventing" mechanism may enable a service to send updated event messages that contain names of one of more service variables, current values, service descriptors, etc., that are subscribed to by model service state or control points, when actions occur changing the service variables. A session management mechanism may define a service invocation, input resolution(s), and addition of dependencies, performing actual service work and returning data in response to a client establishing a session of a discovered service.

As another illustration of the mechanisms involved in such conventional service discovery protocols, the IETF "Service-Location-Protocol" may provide "user-agents" the ability to perform service discovery on behalf of a client (e.g., a user, an application, etc.), "service-agents" that advertise expected service location and service characteristics on behalf of service provider devices, and "director-agents" that collect and/or develop a dynamic database of "service-agents" and corresponding service information to broker service requests from "user-agents".

In addition to service discovery protocols, media streaming services distributed with MPEG protocols may require service registration as well as the generation and distribution of MPEG service descriptors (i.e., program-specific information (PSI)/system information (SI)) in order to properly route the media. Conventional service management techniques may use a separate entity for service registration, such as Jini's Service-Lookup and UPnP's Control-Point. However, complex media delivery (i.e., MPEG streaming) requirements of systems, such as those employing Miracast Revision-2 with source/sink pairs, may not be well-suited for adding such a separate, third-party entity for service registration. Such conventional reliance on separate entities may be further problematic when mobile devices (e.g., smartphones, tablets, etc.) periodically enter or exit platforms. Additionally, typical consumer electronic devices often engaged in streaming platforms (e.g., TV, monitors, etc.) may have protracted development cycles, typically making these devices unable to comply with the design complexities required for supporting service registration. More versatile techniques are needed that provide mobile service discovery, registration, and management for MPEG streaming services for wireless media delivery platforms (e.g., Miracast Revision-2).

Various embodiments described herein provide methods, devices, systems, and non-transitory process-readable storage media for a wireless media delivery service management framework that utilizes a mobile device (e.g., smartphone, tablet, etc.) as a mobile, central registry to enable scalable, adaptive MPEG services based on the connectable support devices, capabilities, and/or conditions available in a given environment. Such a mobile device configured to implement the central registry and manage dynamic MPEG services is referred to herein as an "MPEG service management mobile device" (or an "MSMM" device). These embodiment service frameworks may be considered collaborative, distributed, and unstructured, as devices capable of transmitting and/or rendering MPEG services may be arbitrarily available in any given environment or time, thus causing the MPEG service management mobile device to potentially identify and facilitate different available MPEG services. For example, in a first environment (e.g., a home), certain MPEG services may be identified as available based on the service provider devices and/or service consumer devices present in the first environment, whereas in a second environment (e.g., an office), different MPEG services may be identified as available based on the service providers and/or service consumers present in the second environment. In other words, with a mobile, central registry and service manager, the embodiment techniques provide mechanisms for adaptively identifying and facilitating MPEG services for Miracast Revision-2 platforms based on arbitrary devices, their capabilities, and/or dynamic conditions.

In various embodiments, the MPEG service management mobile device may support platform-wide service registration of devices, maintaining a single coherent service directory (or service-registry) of any devices it connects with (e.g., service provider devices or service consumer devices). As the MPEG service management mobile device moves (with its user) among different environments (e.g., home, work, coffee shop, etc.) supporting MPEG service platforms (e.g., Miracast Revision-2), the MPEG service management mobile device may register (or mark) devices and platforms it communicates with for later use in identifying service/support availability. In particular, the MPEG service management mobile device may proactively query devices that are offering MPEG services (e.g., receiving video media via peer-to-peer (P2P) communications, etc.). For example, based on discovery communications within a home environment, the MPEG service management mobile device may store data indicating device information (e.g., media access control (MAC) data, etc.) of media rendering devices in a service-registry (or data table) associated with the home environment. Such querying and related stored data may be used to identify available services applicable to applications executing on the MPEG service management mobile device (or other devices) regardless of any current location. For example, the MPEG service management mobile device may not look at network identifiers and/or geo-locations (e.g., GPS coordinates, etc.) to determine the presence of available MPEG services at a given time, but instead may only canvas the available devices and capabilities required for MPEG services to be available for use at the given time.

The MPEG service management mobile device may determine an MPEG service is available when any device (and device capabilities) known to provide that MPEG service are available at a given time. For example, an MPEG service may be available for use when a first head-mounted display (HMD) is available, or alternatively, when a second head-mounted display with similar functionalities is available. In some embodiments, such interchangeability may be enabled by the MPEG service management mobile device evaluating its stored registry data via a registry agent to match any available devices, capabilities, and/or conditions with known MPEG service requirements. The registry agent implemented on the MPEG service management mobile device may not be like a conventional broker agent, as the registry agent may not always be attached to a certain gateway, environment, or platform, such as home gateway, but instead may be capable of utilizing various contexts in various platforms/environments to identify and negotiate available MPEG services with whatever devices are within communication range at a given time or environment.

The following is an illustration of embodiment real-time identifications of available services, such as using stored registry profiles. The MPEG service management mobile device (e.g., via its registry agent) may actively query or otherwise receive identifiers of nearby devices, their capabilities, and associated services at a given time, such as by transmitting ping messages that cause responses to be transmitted by nearby devices. The MPEG service management mobile device may store that received response information indentifying such devices (or markers), and may further identify a particular platform based on the devices reachable at a given time. Over time, in response to receiving identifiers, the MPEG service management mobile device may compare received identifiers to stored lists of identifiers previously registered to identify the service context relevant at a given time (e.g., a stored registry related to a certain environment). For example, the MPEG service management mobile device may compare the identifiers of a printer device and a TV device to a list of all known devices and, based on their matching the stored information, may determine the MPEG service management mobile device is in a home environment supporting a Miracast Revision-2 platform. Based on the matching, the MPEG service management mobile device may then know the possible services that may be facilitated. For example, when the MPEG service management mobile device may determine it is at a known environment associated with a coffee shop, the MPEG service management mobile device may make available MPEG services associated with the registered devices of that coffee shop, if any.

Based on the availability of MPEG services, the MPEG service management mobile device may generate MPEG service descriptors (or identifiers) for broadcast to devices within the current environment. Such MPEG service descriptors may indicate and be associated with the MPEG services that devices connected to the current environment may be capable of accessing or providing at a given time. The transmission or delivery of the MPEG service descriptors may enable the various devices of the current environment to be configured to either transmit or listen for relevant or requested MPEG data streams. For example, the MPEG service management mobile device may broadcast up-to-date MPEG service descriptors (e.g., program and system information (PSI/SI), packet identifiers (PIDs), etc.) related to the capabilities of available media-rendering devices in an office environment associated with a Miracast Revision-2 platform. As another example, the MPEG service management mobile device may translate available services to MPEG PIDs such that a head-mounted display supporting 720P resolution may receive data from a video-streaming service using particular PIDs. As another example, the MPEG service management mobile device may broadcast PIDs that indicate audio, close-captioning, and video services can be rendered at a given time. In this way, the MPEG service management mobile device may use MPEG service descriptors to indicate to devices the services that are available for use with applications and how to access associated streaming media (e.g., receive/decode audio/video, etc.).

In some embodiments, MPEG services may be associated with one or more MPEG service identifiers, such as a first PID for video and a second PID for audio. For example, the MPEG service management mobile device may be configured to generate PIDs for different aspects of a multi-faceted MPEG service, such as by associating a first PID with an audio stream, a second PID with a closed-captioning stream, and a third PID with a video stream of a TV show.

In some embodiments, with the stored, central registry of all devices capable of providing services, the MPEG service management mobile device may identify MPEG services that are available when capabilities of different devices are combined. For example, the MPEG service management mobile device may compare capabilities (e.g., video, speaker, printing, etc.) of a plurality of devices determined to be currently available for a platform to requirements of MPEG services to identify whether individual capabilities of some of the plurality of devices may be used in combination to provide fused, virtual MPEG services. In other words, the MPEG service management mobile device may use its comprehensive understanding of all devices and capabilities of a current environment to dynamically enable devices to be connected to one another using the service descriptors so that composite MPEG services may be provided for use by applications on the devices.

In some embodiments, the MPEG service management mobile device may adaptively determine applications and/or application parameters/configurations that can be executed on platform devices at a given time. In other words, the MPEG service management mobile device may determine functionalities, settings, and/or parameters that are feasible for available MPEG services, and adaptively/dynamically adjust (or "groom") MPEG services to predefined or requested specifications (e.g., required specifications of applications using related MPEG streams). For example, the MPEG service management mobile device may adjust video attributes (e.g., monoscopic, stereoscopic, multi-view, etc.), output device requirements (e.g., head-mounted display (HMD), etc.), video resolution (e.g., 1K/4K, etc.), audio specifications (e.g., linear pulse-code modulation (LPCM), MP3, advanced audio coding (AAC), stereo 5.1, stereo 7.1, etc.), and input capabilities (e.g., direct-touch, human interface device (HID), etc.) for available MPEG services. Such adjustments may be performed in response to the MPEG service management mobile device evaluating available devices, device capabilities, as well as contextual conditions in real-time, such as networking and device conditions (e.g., battery, channel load, etc.).

In some embodiments, the MPEG service management mobile device may perform dynamic channel characterization operations that evaluate wireless channel performance in order to determine available MPEG services and/or adjust the characteristics of the available MPEG services. For example, in a corner office with a HMD and no channel interference on a Wi-Fi® network, the MPEG service management mobile device may allow hi-definition streaming to a head-mounted display or a 4K monitor. However, if moved to a conference room with bad networking conditions (e.g., Wi-Fi® traffic is overloaded), the MPEG service management mobile device may negotiate services to enable only a lower-definition (720p) service to the head-mounted display or a 1K monitor. In other words, for the MPEG service management mobile device to determine available services, identifying conditions of the wireless channel (e.g., Wi-Fi® channel) with which platform devices communicate can be as important as identifying the support devices available at a given time.

In some embodiments, by continually querying for registered devices, the MPEG service management mobile device may dynamically allow (or disallow) the use/launch of applications on the MPEG service management mobile device based on currently available MPEG services. For example, when no devices that offer printing services are available, the MPEG service management mobile device agent may not launch or enable a printing application. As another example, when display units are available for 4K video-streaming, but networking conditions are poor, the MPEG service management mobile device may not enable a video-streaming application to stream at 4K but instead only 1K.

Embodiment systems using MPEG service management mobile devices are different from conventional service discovery systems as the MPEG service management mobile device is not static and associated with a single gateway or environment. Instead, the MPEG service management mobile device may move from one environment or platform to the next, identifying services based on whatever devices, device capabilities, and/or conditions (e.g., network connectivity, battery levels, etc.) are available at a given time. Further, MPEG service management mobile devices may be configured to record various contexts of platforms such that service registry profiles of different places may be stored and reused. For example, when the handset is taken to a home, it may register services among devices in the home, and when in a coffee shop, the MPEG service management mobile device may also remember devices at that location. In other words, available devices at a given time may be marker devices that indicate which service registry profile the MPEG service management mobile device may use to adaptively orchestrate services for MPEG communications. In addition, conventional systems, such as DLNA platforms, may not generate MPEG service descriptors based on identifying currently available devices and/or capabilities that may be used by service provider devices and/or service consumer devices to know how to receive/decode media data (e.g., audio, video, etc.).

Embodiment systems are further different from conventional systems in that services are not determined to be available based on geo-location or networking addresses (e.g., IP addresses). Instead, embodiment MPEG service management mobile devices are configured to identify available services by evaluating registered devices (and their capabilities) and/or other conditions at a given time to interpret what MPEG services can be utilized at a given time. Further, the MPEG service management mobile device may make such determinations by combining the capabilities of a plurality of devices, forming "virtual devices" in order to support particular services when a single service provider device and/or service consumer device having all capabilities for the service does not exist at a given time. Conventional techniques do not negotiate service levels or configurations based on available devices (and their capabilities) and/or networking conditions, whereas the embodiment techniques may allow adaptive services based on the current context the MPEG service management mobile device is within, such as by limiting video-streaming services when batteries are low or there is a high channel load on communication channels.

The various embodiments are beneficial in that they provide service management techniques to enable adaptively groomed services for MPEG protocol streaming platforms, such as Miracast Revision-2. A mobile device configured to operate a service management agent (i.e., MPEG service management mobile device) may provide a singular service directory that is capable of being used to utilize either provider or service consumer devices in multiple platforms, improving the functionality of various wireless media delivery platforms by removing the need for superfluous devices for service management and application management for MPEG applications. Since the MPEG service management mobile device may be network agnostic and able to move among multiple Miracast Revision-2 platforms, detecting the presence of MPEG services based on whatever consumer or service provider devices are available at a given time, devices of such platforms are benefitted as MPEG services may no longer be statically defined as based on mere location. Further, the various devices of a wireless display platform may not be required to have any understanding of other devices, as the MPEG service management mobile device may be configured to proactively broadcast MPEG service descriptors to identify and/or enable MPEG services to those devices. Additionally, by evaluating in real-time the available devices, and/or conditions of a networking environment at a given time, the MPEG service management mobile device may also negotiate MPEG services to required specifications (e.g., Monoscopic vs. Stereoscopic or Multi-View, HMD or 4K Monitor/TV, LPCM vs. MP3 or AAC, Stereo vs. 5.1 or 7.1, Direct-Touch or HID, etc.), thus improving user experiences with better configured and/or situation-appropriate services.

The various embodiments may improve the functioning of various devices associated with media streaming platforms, such as Miracast Revision-2, by enabling arbitrary combinations of devices to provide and/or consume MPEG services to complete a total service. Creating such dynamic, combined services may allow better able devices to be used, thereby improving system efficiency, etc. Further, as the MPEG service management mobile device is capable of negotiating parameters (e.g., playback resolution, etc.) of media streams, the functioning of the devices of a platform may further be improved by tailoring MPEG streams to participating, available devices requirements and/or capabilities at a given time. Additionally, the efficiency of the MPEG service management mobile device is improved in that only services actually available for use at a given time are broadcast, thus preserving transmission efficiency. For example, when a head-mounted display has a dead battery, the MPEG service management mobile device may not broadcast messages indicating that a video projecting service is available, thus saving energy and processing operations.

It should be appreciated that the embodiment techniques described herein relate to service management by a MPEG service management mobile device configured to facilitate services within a media streaming platform, such as Miracast Revision-2. Only the MPEG service management mobile device providing such service descriptors (e.g., PIDs) to devices of a platform may have a full understanding of the capabilities in an environment at a given time, and so may be the only provider of service descriptors for actualizing MPEG delivery sessions. For example, the MPEG service management mobile device may indicate to devices the certain set of PIDs needed for a particular service (e.g., streaming movies, etc), without which, that service would be inaccessible by sink devices. Further, it should be appreciated that the various embodiments are not limited to or otherwise address real-transport protocol (RTP) or synchronization, such as synching multiple data sources on a single display device (e.g., a multi-threaded game on a single TV).

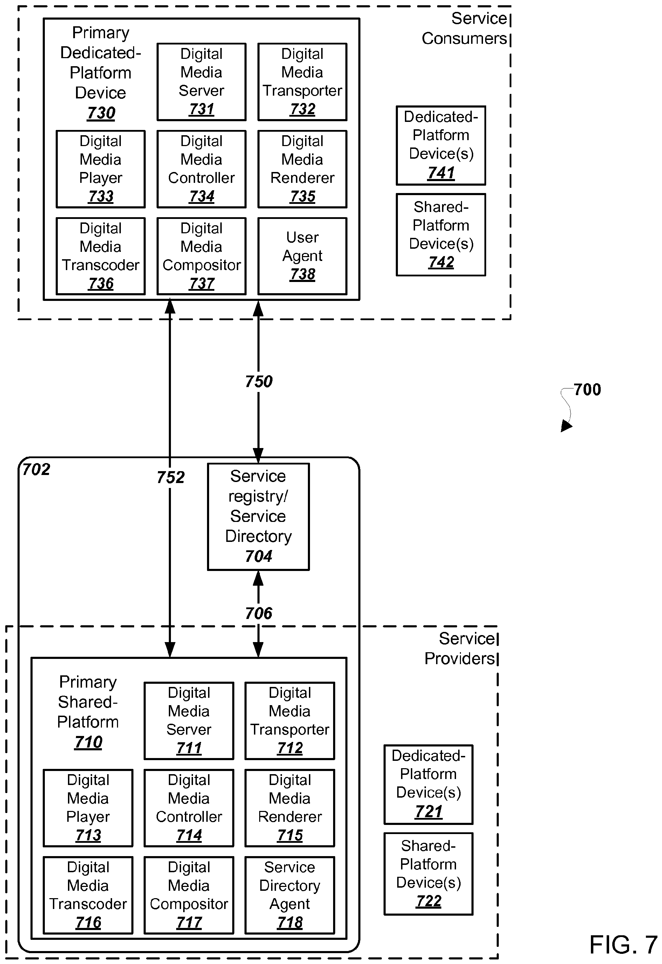

FIG. 7 illustrates an exemplary mobile device 702 (e.g., a smartphone, a tablet, etc.) configured according to various embodiments to provide service management functionalities for use in an MPEG streaming platform 700, such as within a Miracast Revision-2 Platform Architecture. Such a mobile device 702 may be capable of moving between multiple networking environments and/or platforms, such as going from a first Wi-Fi® LAN to a second Wi-Fi® LAN. In other words, the mobile device 702 may be considered a shared-platform device capable of reaching multiple service platforms in various environments. The MPEG streaming platform 700 may be utilized by a plurality of service consumer devices configured to receive and utilize MPEG streams, such as devices 730, 741, 742, as well as a plurality of service provider devices configured to provide MPEG streams, such as devices 702, 721, 722. The service consumer device 730 may be considered a "primary-dedicated-platform" device, as the device 730 may be accessible only in a certain platform, such as the current platform 700. Other devices 741 within the plurality of service consumers may also be "dedicated" to (or associated with) the particular platform 700, and other devices 742 may be associated with various platforms (i.e., shared platform devices). The mobile device 702 may be considered a "primary shared-platform" device, as the mobile device 702 may be accessible in various platforms. Other service provider devices 721 within the plurality of service provider devices may be "dedicated" to (or associated with) the particular platform 700, and other devices 722 may also be associated with various platforms (i.e., shared platform devices).

Configured to operate as an MPEG service management mobile device, the mobile device 702 may be configured to keep track of various registered devices that may be used to provide or consume MPEG services facilitated by the mobile device 702. Specifically, the mobile device 702 may be configured with a service registry/service directory module 704 capable of identifying available devices (and their capabilities) based on messages received via wireless communications 750. For example, the mobile device 702 may periodically query for available service consumer devices and/or service provider devices, and in response may receive data via the wireless communications 750 from a nearby service consumer device 730, indicating identifiers, codes, data, identifiers, and/or other information describing the service consumer device modules, units, input/out functions, battery level, installed software, coupled hardware, and other information indicating the capabilities and/or conditions of the service consumer device 730 to render MPEG streams.

The mobile device 702 may be configured to operate as the MPEG service management mobile device. Thus, the mobile device 702 may utilize a set 710 of primary shared-platform modules that may include various modules, applications, routines, operations, and other data for performing various operations related to receiving, transmitting, and/or otherwise handling MPEG streams via a MPEG streaming platform (e.g., Miracast Revision-2, etc.). For example, the set 710 of primary shared-platform device modules may include a Digital Media Server module 711 that enables service reach (exposure and distribution), a Digital Media Transporter module 712 that manages digital media retrieval and/or delivery (e.g., a digital media uploader) and digital media archiving/storage (e.g., a digital media downloader), a Digital Media Player module 713 that independently and autonomously enables service use, a Digital Media Controller module 714 that coordinates and/or manages service use, a Digital Media Renderer module 715 that enables service use managed by the Digital Media Controller module 714, a Digital Media Transcoder module 716 that translates digital media, a Digital Media Compositor module 717 that creates complex services, and a service directory agent module 718. It should be appreciated that, unlike a typical Digital Media Controller module 714 that may only transform a service based on consumer specifications, the service-registry/service-directory 704 may also be configured to evaluate Wi-Fi medium characteristics (e.g., distributed coordination function (DCF)) to control digital media and use-case/ applications. The set 710 of modules may be coupled to or otherwise in communication with the service registry/service directory module 704, such as via a bus or other connection 706. In some embodiments, the mobile device may collaborate with a platform digital rights manager (DRM).

The primary-dedicated platform service consumer device 730 may utilize a set of modules that may include various modules, applications, routines, operations, and/or other data for performing various operations related to receiving and/or utilizing MPEG streams. For example, the set of modules may include a Digital Media Server module 731 that enables service reach (exposure and distribution), a Digital Media Transporter module 732 that manages digital media retrieval/delivery (e.g., a Digital-Media-Uploader) and digital media archiving/storage (e.g., a Digital-Media-Downloader), a Digital Media Player module 733 that independently and autonomously enables service use, a Digital Media Controller module 734 that coordinates/manages service use, a Digital Media Renderer module 735 that enables service use managed by the Digital Media Controller module 734, a Digital Media Transcoder module 736 that translates digital media, a Digital Media Compositor module 737 that creates complex services, and a User Agent module 738. Modules, such as the User Agent module 738, may be used for various use-cases or applications, such as by enabling functionalities needed for other capabilities. For example, for video-telephony, the Digital Media Compositor module 737may be configured to establish use of a camera. As another example, for secure use-case/applications, the Digital Media Compositor module 737 may engage face-recognition functionalities or other user verification functionalities as a required service before launch. The primary-dedicated platform service consumer device 730 may be in communication with the mobile device 702, such as by receiving MPEG stream communications handled by the set 710 of modules via the wireless connection 752.

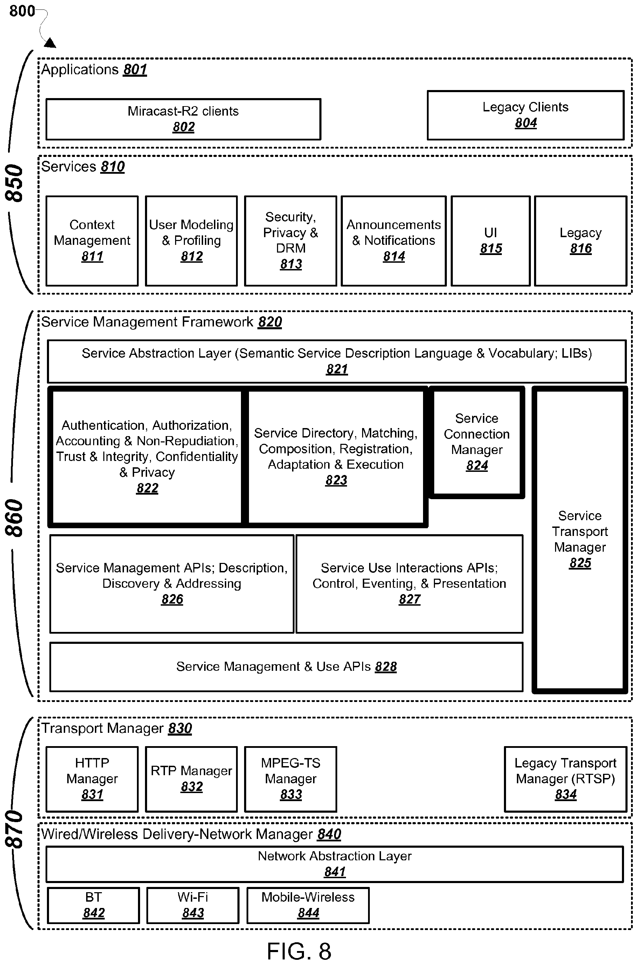

FIG. 8 illustrates an embodiment architecture 800 for service management components in a MPEG service management mobile device suitable for use in MPEG streaming platforms, such as Miracast Revision-2 platforms. In general, the architecture 800 may include an application/service layer 850, a service management layer 860, and a connection layer 870. The application/service layer 850 may include modules, routines, software, and/or other functionalities for handling applications (or use cases) and MPEG services. In particular, the application/service layer 850 may include an applications component 801 that is associated with various client applications (or use cases). The applications component 801 may include a Miracast Revision-2 client module 802 associated with various use-cases or applications for using Miracast Revision-2 platforms, as well as a legacy client module 804 associated with older applications that may or may not be capable of using Miracast Revision-2 services. The application/service layer 850 may also include a services component 810 that may include various modules associated with services, such as a context management service module 811, a user modeling and profiling service module 812, a security, privacy, and digital rights management (DRM) service module 813, an announcements and notifications service module 814, a user interface (UI) service module 815, and a legacy service module 816.

The service management layer 860 may include modules, routines, software, and/or other functionalities for managing services, such as those supported in the application/service layer 850. In particular, the service management layer 860 may include a service management framework component 820 that may include a service abstraction layer module 821 (e.g., semantic service description language, vocabulary, and libraries), an authentication, authorization, accounting and non-repudiation, trust and integrity, confidentiality and privacy module 822 that includes: an authorization functionality used to control user access to services according to allowable permission profiles; an authentication functionality used to vouch for (or confirm) the identify of a user and/or the integrity of a service; an accounting functionality used to measure a use of a service; a non-repudiation functionality for undeniably confirming users' use of a service; a trust and integrity functionality for enabling a user to receive expected services without any unknown precautions; a confidentiality functionality for denying unintended use of services; and a privacy functionality for concealing user use of services from others. The service management layer 860 may also include a service management framework component 820 that may include: a service directory, matching, composition, registration, adaptation and execution module 823; a service connection manager 824; a service transport manager 825; a service management API, description, discovery and addressing module 826; a service use interactions API, control, eventing, and presentation module 827; and a service management and use API module 828.

The connection layer 870 may include modules, routines, software, and/or other functionalities for enabling and managing connections (or communications). In particular, the connection layer 870 may include: a transport manager component 830 that includes an HTTP manager module 831; an RTP manager module 832; an MPEG transport stream (MPEG-TS) manager module 833; and a legacy transport manager module 834 (e.g., a module for handling real-time streaming protocol (RTSP)). The connection layer 870 may also include a wired/wireless delivery network manager component 840 that includes a network abstraction layer module 841, a Bluetooth® module 842, a Wi-Fi® module 843, and a mobile-wireless module 844.

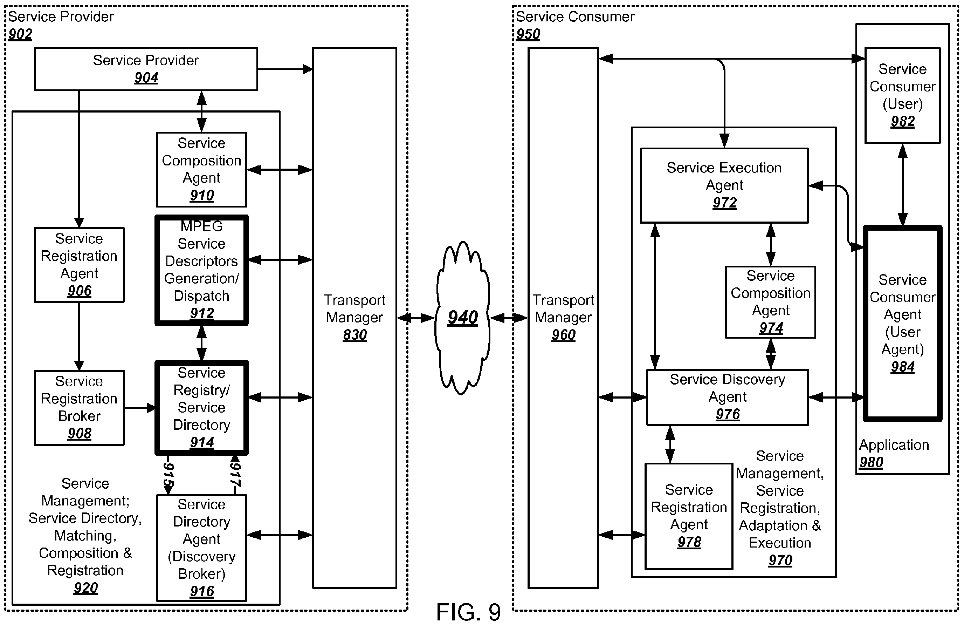

FIG. 9 illustrates an embodiment collaborative, distributed, and unstructured service management architecture utilized by at least a MPEG service management mobile device 902 and a service consumer device 950. With reference to FIG. 9, in addition to operating as a service management device, the MPEG service management mobile device 9020 may be configured to operate as a service provider device, such as by providing MPEG media streams for receipt and rendering by the service consumer device 950.

The MPEG service management mobile device 902 may include various software, modules, components, routines, and other data for performing service management operations and/or delivering MPEG streams. In particular, the MPEG service management mobile device 902 may include a service provider component 904, a transport manager component 830, and a service management, service directory, matching, composition and registration component 920. The service management, service directory, matching, composition and registration component 920 may include a service composition agent module 910 configured to exchange data with the service provider component 904, a service registration agent module 906 configured to receive information from the service provider component 904 and provide information to a service registration broker module 908, the service registration broker module 908 configured to receive information from the service registration agent module 906 and provide information to a service registry/service directory module 914, the service registry/service directory module 914 configured to receive requests 917 from a service directory agent module 916 (or discovery broker) related to the service consumer device 950, as well as, in response, provide MPEG service descriptors 915 to the service directory agent module 916. The service registry/service directory module 914 may exchange information with an MPEG service descriptors generation/dispatch module 912 configured to create MPEG descriptors for broadcast to other devices.

The transport manager component 830 may be capable of exchanging communications with other devices, such as the service consumer device 950, via various wireless networks 940 or wireless communication protocols, such as a Wi-Fi® LAN, Wi-Fi® Direct, Bluetooth®, etc. In some embodiments, the service provider component 904, service composition agent module 910, MPEG service descriptors generation/dispatch module 912, service registry/service directory module 914, and/or service directory agent module 916 may be capable of exchanging information directly with the transport manager component 830.

The service consumer device 950 (or sink device) may include various software, modules, components, routines, and other data for communicating with service management devices, as well as receiving and utilizing (e.g., rendering) MPEG streams. In particular, the service consumer device 950 may include an application component 980, a transport manager component 960, and a service management, service registration, adaptation and execution component 970. The service management, service registration, adaptation and execution component 970 may include a service execution agent module 972 configured to exchange data with a service consumer agent module 984 of the application component 980, a service composition agent module 974, and a service discovery agent module 976. The service composition agent module 974 may be configured to exchange information with the service discovery agent module 976, which in turn may be configured to exchanging data with the service consumer agent module 984 and a service registration agent module 978. The application component 980 may include a service consumer module 982 configured to exchange data with the service consumer agent module 984.

The transport manager component 960 may be capable of exchanging communications with other devices, such as the MPEG service management mobile device 902, via various wireless networks 940 or wireless communication protocols, such as a Wi-Fi® LAN, Wi-Fi® Direct, Bluetooth®, etc. In some embodiments, the service consumer module 982, the service execution agent module 972, the service discovery agent module 976, and the service registration agent module 978 may be capable of exchanging information directly with the transport manager component 960.

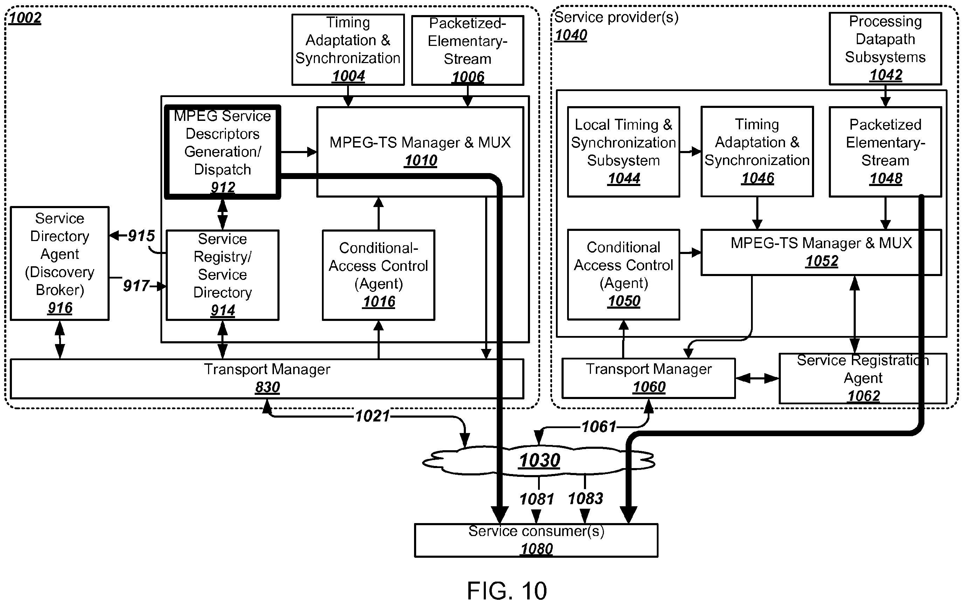

FIG. 10 illustrates an embodiment collaborative, distributed, and unstructured service management architecture utilized by at least a MPEG service management mobile device 1002, a service provider device 1040, and a service consumer device 1080. Similar to as described with reference to FIG. 9, in addition to operating as a service management device, the MPEG service management mobile device 1002 may be configured to operate as a service provider device, such as by providing MPEG media streams for receipt and rendering by the service consumer device 1080. The service provider device 1040 may be capable of providing additional, supplementary, and/or separate MPEG streams from those provided to the service consumer device 1080 by the MPEG service management mobile device 1002. For example, the MPEG service management mobile device 1002 may provide a video MPEG stream and the service provider device 1040 (e.g., a desktop computer within a home environment) may provide an audio MPEG stream for simultaneous use on the service consumer device 1080. As another example, the MPEG service management mobile device 1002 may simply broadcast MPEG service descriptors to enable the service provider device 1040 to successfully deliver audio and video streams to the service consumer device 1080. Although FIG. 10 shows a single service provider device 1040 and a single service consumer device 1080, it should be appreciated that any number of service provider devices or service consumer devices may be supported within a platform.

As described above, the MPEG service management mobile device 1002 may include various software, modules, components, routines, and other data for discovering, collecting, scheduling, and broadcasting up-to-date MPEG service descriptors, such as PSI/SI for Miracast Revision-2 platforms, in order to orchestrate the delivery of MPEG streams from service provider devices 1040 to service consumer devices 1080. In particular, the MPEG service management mobile device 1002 may include a timing, adaptation, and synchronization module 1004 and a packetized-elementary stream module 1006 that provide data to an MPEG-TS manager and multiplexor (MUX) module 1010. The MPEG-TS manager and MUX module 1010 may also receive information from a conditional-access control module 1016 (or agent) and an MPEG service descriptors generation/dispatch module 912 that may also exchange data with a service registry/service directory module 914, as described above. The service registry/service directory module 914 may provide MPEG service descriptors 915 to and receive requests 917 from a service directory agent module 916 (or discovery broker).

The transport manager component 830 may be capable of exchanging communications with other devices, such as the service consumer device 1080 and/or the service provider device 1040, via connections 1021 to various wireless networks 1030 using various wireless communication protocols, such as a Wi-Fi® LAN, Wi-Fi® Direct, Bluetooth®, etc.. In some embodiments, the transport manager component 830 may exchange data with various modules, including the service directory agent module 916 and the service registry/service directory module 914, may receive data from the MPEG-TS manager and MUX module 1010, and may provide data to the conditional-access control module 1016.

The service provider device 1040 may include various software, modules, components, routines, and other data for registering with the MPEG service management mobile device 1002 and providing MPEG streams to the service consumer devices 1080. In particular, the service provider device 1040 may include a processing data path subsystem module 1042 that provides data to a packetized elementary-stream module 1048. Further, the service provider device 1040 may include a timing adaptation and synchronization module 1046 that, along with the packetized elementary-stream module 1048, provides data to an MPEG-TS manager and multiplexor (MUX) module 1052. The MPEG-TS manager and MUX module 1010 may also receive information from a conditional-access control module 1016 (or agent), and may exchange data with a service registration agent module 1062. A local timing and synchronization subsystem module 1044 may provide data to the timing adaptation and synchronization module 1046.

The transport manager component 1060 may be capable of exchanging communications with other devices, such as the MPEG service management mobile device 1002 and/or the service consumer device(s) 1080, via connections 1061 to various wireless networks 1030 using various wireless communication protocols, such as a Wi-Fi® LAN, Wi-Fi® Direct, Bluetooth®, etc. In some embodiments, the transport manager component 1060 may exchange data with various modules, including the service registration agent module 1062, may receive data from the MPEG-TS manager and MUX module 1052, and may provide data to the conditional-access control module 1050.

As described above, the service consumer device(s) 1080 may be capable of exchanging communications with other devices, such as the MPEG service management mobile device 1002 and/or the service provider device 1040, via connections to various wireless networks using various wireless communication protocols. In particular, the service consumer device(s) 1080 may receive MPEG service descriptors 1081 from the MPEG service management mobile device 1002 and MPEG streams 1083 (e.g., data packets, packetized elementary stream (PES) payloads, etc.) from the service provider device 1040 and/or the MPEG service management mobile device 1002.

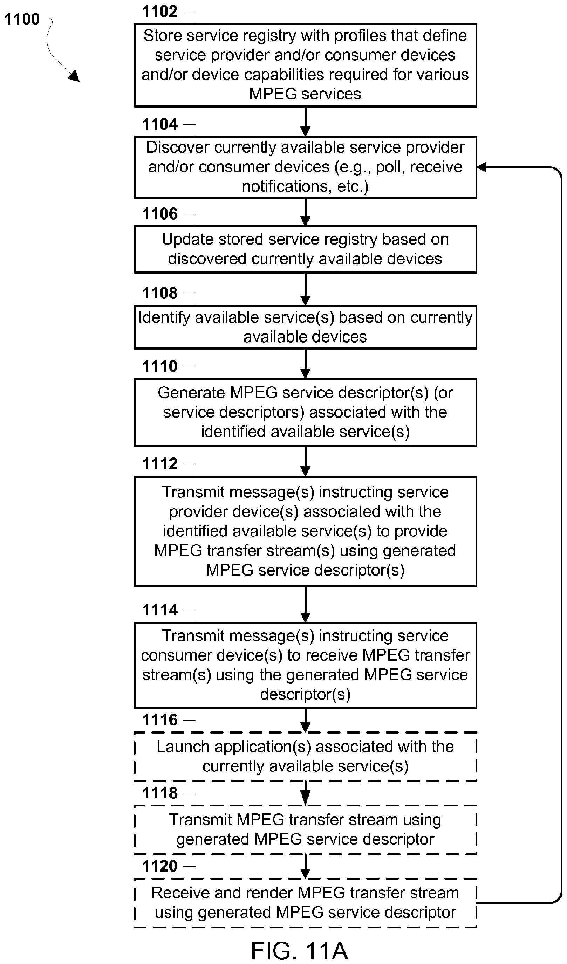

FIG. 11A-11B illustrate embodiment methods 1100, 1150 for a MPEG service management mobile device to enable MPEG services within a wireless display platform (e.g., a Miracast Revision-2 platform). The methods 1100, 1150 may be performed by a mobile device configured as a service management agent to identify and utilize services across various environments or platforms, allowing MPEG services (e.g., audio-streaming, video-streaming, etc.) to be achieved by nearby devices (including itself) independent of location and based on the current availability of registered devices. For example, the MPEG service management mobile device may perform the methods 110, 1150 to discover devices (e.g., TV monitor, speakers, etc.) that may generate and/or consume MPEG streams, identify related, available MPEG services, and provide service identifiers (e.g., PIDs) for the available MPEG services to enable delivery of the MPEG streams. In other words, the embodiment methods 110, 1150 may be performed by the MPEG service management mobile device to manage service directories that may be used in facilitating the delivery of packets that carry audio, video, etc., similar to how a satellite or cable head-end works with broadcast television programs, and thereby to enable MPEG services independent of geographical locations.

Referring to FIG. 11A, in block 1102, the processor of the MPEG service management mobile device may store a service registry with profiles that define service provider devices and/or service consumer devices, as well as device capabilities required for various MPEG services (i.e., a plurality of MPEG services). In particular, the MPEG service management mobile device may maintain a local database or other data structure capable of storing records that indicate device identifiers, capabilities, and other information related to MPEG services that may be utilized or facilitated by the MPEG service management mobile device. For example, the MPEG service management mobile device may store a plurality of profiles that each include identifiers of related devices (e.g., monitors, head-mounted displays, printers, etc.), data indicating whether each device can receive audio and/or video MPEG streams, data indicating whether each device can produce (or otherwise transmit) audio and/or video MPEG streams, and/or data indicating configurations of services that may be possible (e.g., high resolution video, medium resolution video, etc.). In some embodiments, the stored registry may be initialized by user inputs or alternatively may be loaded onto the MPEG service management mobile device in other manner, such as by loading a default registry of universally-approved or default services and/or devices.

In some embodiments, the MPEG service management mobile device may store data that relates MPEG services (e.g., movie viewing, music streaming, printing, etc.) with functionalities (e.g., high-resolution video-streaming, audio-streaming, printing, etc.) that may or may not be available at a given time or environment. The MPEG service management mobile device may also store data indicating all registered devices, such as set top boxes, monitors, speakers, etc., that have been registered for use with the MPEG service management mobile device. Such stored data of the registered devices may also include data (e.g., bits, flags, etc.) indicating whether the registered devices are available at a given time, such as based on discovery (e.g., pinging, polling, etc.) operations as described below. The MPEG service management mobile device may be configured to periodically, or in response to received events (e.g., performed a new poll of available devices, registered a new device, etc.), determine whether each in the stored data of services are available at a given time, and may set data to indicate such determinations (e.g., set a flag or variable to indicate a video-streaming service is currently available, etc.). In some embodiments, the MPEG service management mobile device may link stored data of MPEG services that are currently available to the stored data of devices that are also available and used to determine the services are available. For example, a high-resolution video-streaming service entry in a database may have a flag set to 'available' (or true, etc.) as well as a data field that indicates the identifier of a registered head-mounted display that is currently available and capable of rendering high-resolution video.

In block 1104, the processor of the MPEG service management mobile device may discover currently available service provider and/or service consumer devices. In some embodiments, the MPEG service management mobile device may poll nearby devices (e.g., devices connected to a common Wi-Fi® LAN, devices reachable via Bluetooth® short-range signaling, etc.) by transmitting query messages that prompt responses. For example, the MPEG service management mobile device may broadcast messages via Wi-Fi® Direct or Bluetooth® protocols that include codes or other data that recipient devices may identify as queries related to MPEG service availability, causing the recipient devices to transmit response messages when they are either service provider devices and/or service consumer devices for a Miracast Revision-2 platform. In some embodiments, the MPEG service management mobile device may simply monitor wireless signaling on a predetermined communication channel or medium (e.g., Wi-Fi® signaling, etc.) to identify messages indicating the presence of registered service provider and/or service consumer devices.

In block 1106, the processor of the MPEG service management mobile device may update the stored service registry based on the discovered currently available devices. For example, the MPEG service management mobile device may change the values of flags, variables, and/or other stored data to indicate whether previously unavailable devices are now available and/or whether previously available devices are now unavailable. In some embodiments, such updating may be on a per-capability basis such that individual functionalities of individual devices may be identified as currently available or not. For example, although a certain service provider device (e.g., a smart TV, etc.) typically having the capability of transmitting both audio and video MPEG data is reachable via Wi-Fi® Direct communications, the MPEG service management mobile device may update stored data to indicate that only audio data may be streamed via the service provider device at a given time, as its video-streaming may no longer be available (e.g., video already being streamed, a video codec is incompatible/out-of-date/non-functional, etc.).

In some embodiments, the MPEG service management mobile device may register discovered devices that are not otherwise known to the MPEG service management mobile device by adding them to the stored service registry, such as based on registration request messages from the devices. In some embodiments, only devices that are authorized, authenticated, and/or otherwise approved based on predefined characteristics stored on the MPEG service management mobile device may be used to update the stored service registries. For example, the MPEG service management mobile device may only stored new "registered" devices that are of a particular class or type and/or that are determined to have certain functionalities (e.g., MPEG playback, Bluetooth® signaling, coupled to other units, such as speakers, etc.).

In block 1108, the processor of the MPEG service management mobile device may identify available service(s) based on the currently available devices. For example, the MPEG service management mobile device may evaluate the stored records for each MPEG service and compare required devices and/or capabilities (e.g., high-resolution video-streaming, etc.) to the currently available devices and/or their capabilities to identify which MPEG services are currently available. In some embodiments, in response to determining that a service is currently available or unavailable, the MPEG service management mobile device may set a flag or other stored data associated with the stored data for the service to indicate whether it is available.

In block 1110, the processor of the MPEG service management mobile device may generate MPEG service descriptor(s) (i.e., packet identifier(s) or PSI/SI) associated with the identified available service(s). For example, in response to identifying that a high-resolution video-streaming service is available via a HMD, the MPEG service management mobile device may generate a MPEG service descriptor for that video-streaming service. In various embodiments, the MPEG service management mobile device may generate a plurality of MPEG service descriptors for a single available service. For example, a first descriptor may be generated for audio-streaming and a second descriptor may be generated for video-streaming for a single movie-streaming service.

In block 1112, the processor of the MPEG service management mobile device may transmit message(s) instructing service provider device(s) associated with the identified available service(s) to provide MPEG transfer stream(s) using the generated MPEG service descriptor (s). For example, the MPEG service management mobile device may transmit messages, via Wi-Fi® Direct, Bluetooth®, Wi-Fi®, and/or other wireless communication protocols, that report a generated MPEG service descriptor of a video-streaming service. Such messages may include other information that may be used by recipient devices, such as particular data that service provider devices may provide via MPEG transfer streams (e.g., a particular segment of a video, song, etc.), parameters or settings for configuring the data to be streamed (e.g., high resolution video, a predefined bit rate, etc.), as well as codes or other information that may be used by the service provider devices to authenticate or otherwise use to verify the messages from the MPEG service management mobile device (e.g., identifying information of the MPEG service management mobile device, timestamp information, etc.). In some embodiments, the MPEG service management mobile device may itself be a service provider device and thus may use the generated MPEG service descriptors to transmit MPEG streams.

In block 1114, the processor of the MPEG service management mobile device may transmit message(s) instructing service consumer device(s) to receive MPEG transfer stream(s) using the generated MPEG service identifier(s). In particular, the messages may report that MPEG transfer stream(s) provided by the service provider devices identified above are currently available for receipt and use at the service consumer devices. For example, the MPEG service management mobile device may transmit messages, via Wi-Fi® Direct, Bluetooth®, Wi-Fi®, and/or other wireless communication protocols, that include data that may be used by recipient service consumer devices to prepare for receiving MPEG streams. Other information may be within the transmitted messages, such as particular data describing MPEG transfer streams or services that are currently available, such as characteristics of available MPEG transfer streams (e.g., a particular segment of a video, song, etc.), as well as codes or other information that may be used by the service consumer devices to authenticate or otherwise use to verify the messages from the MPEG service management mobile device (e.g., such as identifying information of the MPEG service management mobile device, timestamp information, etc.). In some embodiments, the MPEG service management mobile device may itself be a service consumer device and thus may use the generated MPEG service descriptors to receive the MPEG streams provided by service provider devices.

In optional block 1116, the processor of the MPEG service management mobile device may launch application(s) associated with the currently available service(s). For example, the MPEG service management mobile device may launch a video-streaming application that may be capable of providing or utilizing an MPEG stream associated with a generated MPEG service descriptor. In optional block 1118, the processor of the MPEG service management mobile device may transmit an MPEG transfer stream using the generated MPEG service descriptor. For example, when configured to operate as a service provider device, the MPEG service management mobile device may begin using Wi-Fi® Direct communications to transmit a video-stream for use by a service consumer device (e.g., a smart TV, a head-mounted display, etc.). In some embodiments, the transmitted MPEG transfer stream may be sent using the application(s) launched with the operations in optional block 1116.

In optional block 1120, the processor of the MPEG service management mobile device may receive and render an MPEG transfer stream using the generated MPEG service descriptor. For example, when configured to operate as a service consumer device, the MPEG service management mobile device may identify incoming video streams associated with a generated MPEG service descriptor, and, once received, may begin displaying the video streams using a coupled display unit (e.g., an LED screen, etc.). In some embodiments, such a MPEG transfer stream may be received and/or rendered using the application(s) launched with the operations in optional block 1116. The MPEG service management mobile device may then continue with the discovery operations in block 1104.

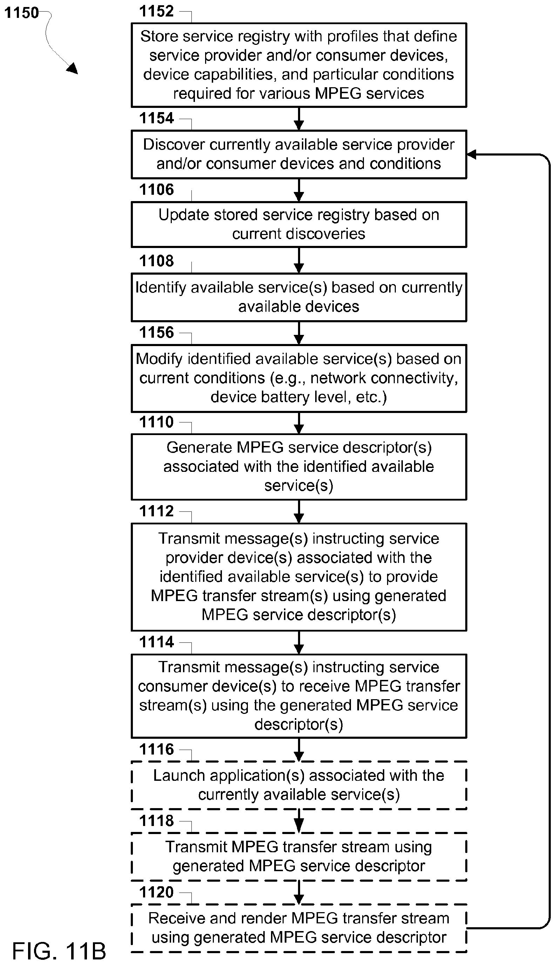

FIG. 11B illustrates an embodiment method 1150 for a MPEG service management mobile device to enable MPEG services within a wireless display platform (e.g., a Miracast Revision-2 platform). The method 1150 is similar to the method 1100 described above with reference to FIG. 11A, except that the method 1150 may include operations for evaluating various conditions, such as signal strength, network traffic/channel conditions, device battery life, etc., when identifying available services. For example, when a Wi-Fi® network is experiencing heavy traffic such that bandwidth necessary for high-resolution video-streaming is not capable, the MPEG service management mobile device may determine that a high-resolution movie service is not available.

With reference to FIG. 11B, in block 1152, the processor of the MPEG service management mobile device may store a service registry with profiles that define service provider and/or service consumer devices, device capabilities, and particular conditions required for various MPEG services. The operations of block 1152 may be similar to as described above with reference to block 1102, except that the MPEG service management mobile device may also be configured to store data that indicates current conditions of a network associated with services (e.g., Wi-Fi® LAN channel conditions, signal strength for Bluetooth® communications, etc.), as well as conditions of devices that may be required for various services, such as battery life remaining. In other words, the stored data may be used to determine whether services are available based on a combination of available devices, their capabilities, and the required conditions within a platform.

In block 1154, the processor of the MPEG service management mobile device may discover currently available service provider devices and/or service consumer devices and conditions, such as channel conditions and device conditions. The operations of block 1154 may be similar to those described above with reference to block 1104, except that the polling or querying and resulting responses from service provider devices and/or service consumer devices may include additional information than mere presence or functionalities of the devices (e.g., software installed, etc.). For example, based on messages received from nearby devices, the MPEG service management mobile device may determine that an available HMD has only a small amount of battery service life remaining. Further, the discovered information may include networking conditions, as monitored by the operating system or other functionalities of the MPEG service management mobile device. For example, the MPEG service management mobile device may query a wireless communication module or controller to determine whether the connectivity or signal strength for that communicating via that wireless communication module is above or below a certain predefined threshold. In some embodiments, the MPEG service management mobile device may poll other devices associated with a networking environment, such as router devices, in order to identify networking conditions, such as current bandwidth, throughput, and/or other traffic conditions of a wireless local area network.

The MPEG service management mobile device may perform the operations of blocks 1106-1108 that may be similar to those operations described above for like numbered blocks. In block 1156, the processor of the MPEG service management mobile device may modify the identified available service(s) based on the current conditions (e.g., network connectivity, device battery level, etc.). The operations of block 1156 may be similar to those described above with reference to block 1108, except that the MPEG service management mobile device may further refine identified available services with other factors, such as the current conditions of the network and/or devices that may contribute to the availability of a service. In other words, the MPEG service management mobile device may utilize requirements other than available devices to determine whether services are currently available (or feasible) at a given time. For example, although a video-streaming service may otherwise be available based only on the identified available service provider devices in an environment (e.g., a smart TV, etc.), the MPEG service management mobile device may modify a list of available services to indicate the video-streaming service is not available when it determines network traffic is above a predefined threshold stored in the service registry in relation to the video-streaming service. As another example, an audio-streaming service may be identified as not available when the MPEG service management mobile device identifies a service provider device (e.g., a media player device) has a battery life that is below a predefined threshold for the audio-streaming service. The MPEG service management mobile device may perform the operations of blocks 1110-1120 that may be similar to those described above for like numbered blocks.

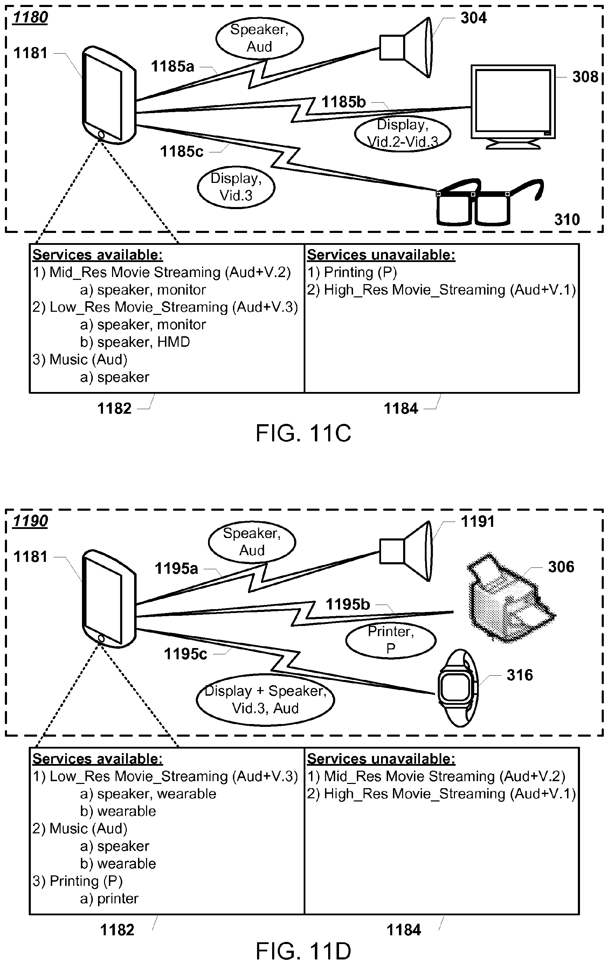

As described above, embodiment MPEG service management mobile devices may be configured to store availability information (e.g., devices and their capabilities) and dynamically identify available services in different environments. For example, available devices capable of streaming high-definition video may enable high-definition (or high-def) movie services. FIGS. 11C-11D illustrate exemplary scenarios for a smartphone MPEG service management mobile device 1181 to discover available services in various environments having devices suitable for use in wireless display platforms, such as Miracast Revision-2 platforms. For example, in response to performing the operations of the embodiment methods 1100 or 1150 described above, the MPEG service management mobile device may identify audio-streaming and/or video-streaming services that may be used within a home or office environment having devices configured to act as Miracast Revision-2 service provider or service consumer devices.

With reference to FIG. 11C, a MPEG service management mobile device 1181, a speaker device 304, a monitor device 308, and a head-mounted display device 310 may all be within a first environment 1180, such as a home, and may be configured to participate in a wireless display platform (e.g., Miracast Revision-2). To discover available services based on available devices and their capabilities, the MPEG service management mobile device 1181 may exchange wireless communications 1185a-1185c (e.g., Wi-Fi® Direct, Bluetooth®, Wi-Fi®, etc.) with the devices 304, 308, 310, respectively. For example, via the first wireless communications 1185a, the MPEG service management mobile device 1181 may receive a first message from the speaker device 304 identifying it as a speaker-type device ("Speaker" in FIGS. 11C-11D) that is configured to support audio MPEG streams ("Aud" in FIGS. 11C-1D), a second message via the second wireless communications 1185b identifying the monitor device 308 as a display-type device ("Display" in FIGS. 11C-11D) that is configured to support both low-resolution MPEG video streams ("Vid.3" in FIGS. 11C-1D) and mid-resolution MPEG video streams ("Vid.2" in FIGS. 11C-11D), and a third message via the third wireless communications 1185c identifying the head-mounted display device 310 as a display-type device that is configured to support low-resolution MPEG video streams ("Vid.3" in FIGS. 11C-1D).

Based on receiving such information from the devices 304, 308, 310, the MPEG service management mobile device 1181 may update stored data to indicate what devices and services are available at that given time while within the first environment 1180. As an illustration, the MPEG service management mobile device 1181 may update a first data table 1182 including records of available services and a second data table 1184 including records of unavailable services. For example, the MPEG service management mobile device 1181 may store data records in the first data table 1182 to indicate that a "mid-res" (or mid-resolution) movie streaming service that requires both audio and mid-resolution video-streaming is available as the speaker device 304 that supports audio-streaming and the monitor device 308 that supports mid-resolution video-streaming are both present, a "low-res" (or low-resolution) movie streaming service that requires both audio and low-resolution video-streaming is available as the speaker device 304 that supports audio-streaming and the monitor device 308 that supports low-resolution video-streaming are both present, the "low-res" movie streaming service is also available based on the speaker device 304 and the head-mounted display device 310 that supports low-resolution video-streaming are both present, and a "music" service that requires audio is available as the speaker device 304 supports audio-streaming. As another example, the MPEG service management mobile device 1181 may store data records in the second data table 1184 to indicate that a "high-res" movie streaming service that requires both audio and high-resolution video-streaming is not available as there are currently no display devices that support high-resolution video-streaming, and that a print service is not available as there are currently no printer devices available in the first environment 1180.

With reference to FIG. 11D, the MPEG service management mobile device 1181, a speaker device 1191, a printer device 306, and a wearable device 316 may all be configured to participate in a wireless display platform (e.g., Miracast Revision-2) and may also be within a second environment 1190, such as a restaurant or office. To discover available devices and thus available services, the MPEG service management mobile device 1181 may exchange wireless communications 1195a-1195c (e.g., Wi-Fi® Direct, Bluetooth®, Wi-Fi®, etc.) with the devices 1191, 306, 316, respectively. For example, via the first wireless communications 1195a, the MPEG service management mobile device 1181 may receive a first message identifying the speaker device 1191 as a speaker-type device that is configured to support audio MPEG streams, a second message, via the second wireless communications 1195b, identifying the printer device 306 as a printer-type device ("Printer" in FIG. 11D) that is configured to support printing, and a third message via the third wireless communications 1195c identifying the wearable device 316 as both a display-type and speaker-type device (e.g., having both a screen and speakers to render MPEG streams) that is configured to support low-resolution MPEG video streams and audio streams.

Based on receiving such information from the devices 1191, 306, 316, the MPEG service management mobile device 1181 may update stored data to indicate what devices and services are available at that given time while within the second environment 1190. As an illustration, the MPEG service management mobile device 1181 may update the first data table 1182 including records of available services and the second data table 1184 including records of unavailable services. For example, the MPEG service management mobile device 1181 may store data records in the first data table 1182 to indicate that the "low-res" movie streaming service that requires both audio and low-resolution video-streaming is available as the speaker device 1191 that supports audio-streaming and the wearable device 316 that supports low-resolution video-streaming are both present, that the "low-res" movie streaming service that requires both audio and low-resolution video-streaming is also available as the wearable device 316 supports both audio-streaming and low-resolution video-streaming, that the "music" service that requires audio is available as the speaker device 304 supports audio-streaming, that the "music" service is also available as the wearable device 316 supports audio-streaming, and that a printing service ("P" in FIG. 11D) is available as the printer device 306 is present. As another example, the MPEG service management mobile device 1181 may store data records in the second data table 1184 to indicate that both the "high-res" movie streaming service and "mid-res" movie streaming service are not available as there are currently no display devices that support high-resolution video-streaming or mid-resolution video-streaming.

The following is another illustration of discovery and identification operations performed by a MPEG service management mobile device as described above. The MPEG service management mobile device in a home environment may discover the presence (and availability) of a high-definition smart TV with speakers, and as a result, may identify that a high-resolution movie-streaming service (e.g., 4K resolution movies) is available in the home. Such information may be stored in a local service registry on the MPEG service management mobile device. Subsequently, the MPEG service management mobile device may be moved in to a coffee shop environment. The MPEG service management mobile device may discover that there is a monitor capable of rendering high-definition video, however there are no speakers present. As a result, the MPEG service management mobile device may store data indicating that no high-resolution movie-streaming service is available in the coffee shop environment. Subsequently, the MPEG service management mobile device may be moved in to an office environment. The MPEG service management mobile device may discover that there is a monitor capable of rendering medium-definition video and that there are speakers available as well. As a result, the MPEG service management mobile device may store data indicating that a medium-resolution movie-streaming service is available in the office environment. In other words, the MPEG service management mobile device may store data that grooms the movie-streaming service (or application) to be fully available for high-resolution in the home, not available in the coffee shop, and available for medium-resolution in the office. However, it should be noted that the application is not groomed for movie-streaming based on location, but instead based on the devices and their characteristics available at a given time.

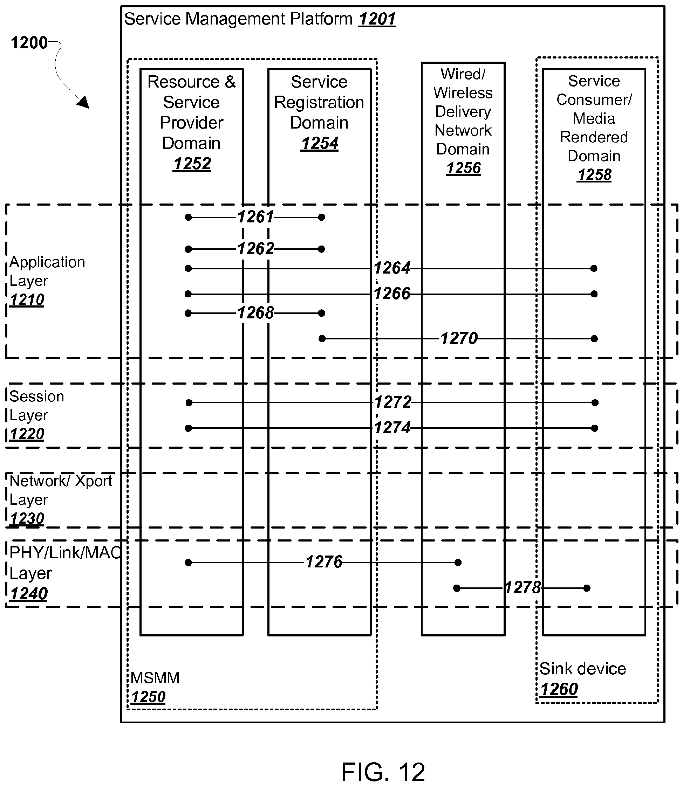

FIG. 12 illustrates a diagram 1200 that shows signals between various devices 1250, 1260 configured to utilize a service management platform 1201 (e.g., a Miracast Revision-2 Service Management platform) according to various embodiments. Although use-case and/or application processing overhead varies among various platform and device designs, optimizing real-time performance in a Miracast Revision-2 platform with many ad-hoc connected devices may require a service-management framework that enables a MPEG service management mobile device (e.g., mobile device, smartphone, tablet, etc.) to dynamically negotiate required services to/from each connected device in a manner that is appropriate for currently available contexts and/or conditions (e.g., network (e.g., Wi-Fi® LAN, etc.) channel performance, etc.).

The service management platform 1201 may include various devices configured to operate as service consumer devices and/or service provider devices of streaming media, such as a MPEG service management mobile device 1250 (e.g., a "Miracast-Aware" smartphone source, etc.) and one or more sink devices 1260 (e.g., "Miracast-Aware" sink device, etc.). Further, the service management platform 1201 may utilize various domains, such as a resource and service provider domain 1252, a service registration domain 1254, a wired/wireless delivery network domain 1256, and a service consumer/media rendered domain 1258. Such domains 1252-1258 may be logical associations corresponding to functionalities of devices of the platform 1201, and/or may be associated with modules, circuitry, software, units, devices, and/or other elements configured to provide particular functionalities with reference to the platform 1201.

Devices 1250, 1260 configured to utilize the platform 1201 may be configured with various layers (e.g., software, protocols, logic, etc.) for communicating with one another via the platform, establishing connections, and other operations for sharing data. In particular, the devices 1250, 1260 may utilize an application layer 1210, a session layer 1220, a network/transport layer 1230, and a physical layer 1240 (referred to in FIG. 12 as "PHY/LINK/MAC" layer). For example, regarding the application layer 1210, the MPEG service management mobile device 1250 may perform service planning operations 1261 and service registration operations 1262 via the resource and service provider domain 1252 and the service registration domain 1254. The MPEG service management mobile device 1250 and the sink device 1260 may perform service proposal review and negotiation operations 1264 and service construction/deconstruction operations 1266 via the resource and service provider domain 1252 and the service consumer/media rendered domain 1258, respectively. The MPEG service management mobile device 1250 may perform service composition operations 1268 via the resource and service provider domain 1252 and the service registration domain 1254. The MPEG service management mobile device 1250 and the sink device 1260 may perform service composition operations 1268 via the service registration domain 1254 and the service consumer/media rendered domain 1258, respectively. Regarding the session layer 1220, the MPEG service management mobile device 1250 and the sink device 1260 may perform service control operations 1272 and service maintenance operations 1274 via the resource and service provider domain 1252 and the service consumer/media rendered domain 1258, respectively. Regarding the physical layer 1240, the MPEG service management mobile device 1250 may perform connection discovery and management operations 1276 via the resource and service provider domain 1252 and the wired/wireless delivery network domain 1256. The sink device 1260 may perform connection discovery and management operations 1278 via the service consumer/media rendered domain 1258 and the wired/wireless delivery network domain 1256.

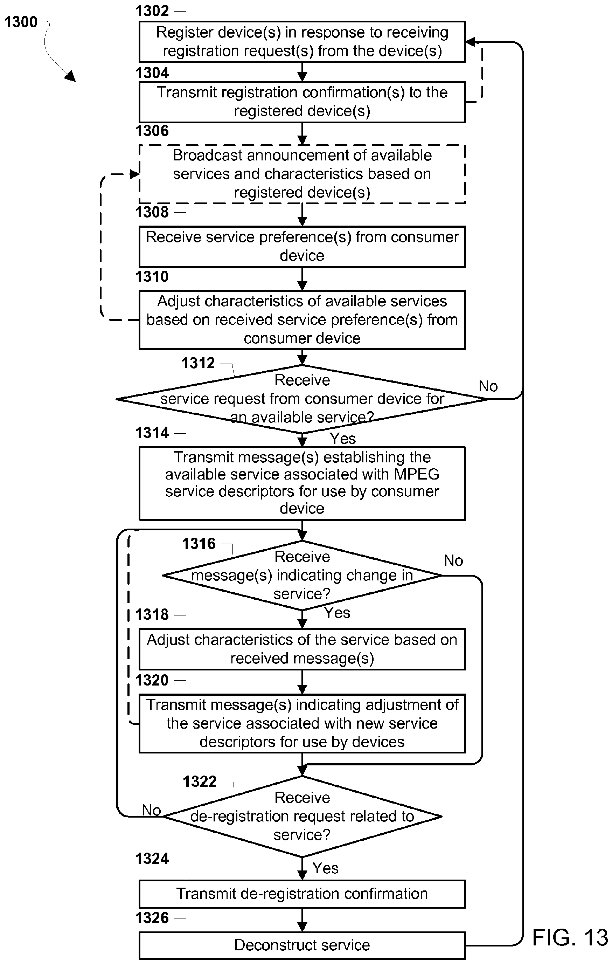

FIG. 13 illustrates an embodiment method 1300 for message processing related to MPEG service management by a MPEG service management mobile device. The embodiment method may be performed to optimize Miracst-R2 platform performance by enabling the MPEG service management mobile device to dynamically learn use-case/concurrency requirements, negotiate service specifications, adapt services to available contexts or conditions (e.g., consumer/service provider device capability profiles, channel loads, battery level (or status), an available codec (or multimedia codec), etc.), and invoke new services.

In block 1302, the processor of the MPEG service management mobile device may register device(s) in response to receiving registration request(s) from the device(s). In some embodiments, the MPEG service management mobile device may receive messages from devices that may indicate identifying information, controls, presentation, availability, and/or status information of the devices for use by the MPEG service management mobile device with registration operations.

In block 1304, the processor of the MPEG service management mobile device may transmit registration confirmation(s) to the registered device(s). In some embodiments, instead of proceeding to perform the operations of optional block 1306, the MPEG service management mobile device may return to perform the operations of block 1302 in response to performing the transmitting operations of optional block 1306. For example, the MPEG service management mobile device may register devices on demand as soon as registration requests are received. In some embodiments, the operations of blocks 1302-1304 may be performed by a registration agent module executing on the MPEG service management mobile device.

In optional block 1306, the processor of the MPEG service management mobile device may broadcast an announcement of available services and characteristics based on the registered device(s). For example, the MPEG service management mobile device may broadcast messages indicating MPEG service descriptors generated by the MPEG service management mobile device in response to identifying available MPEG services as described above with reference to FIG. 11A.

In block 1308, the processor of the MPEG service management mobile device may receive service preference(s) from a service consumer device. For example, such messages may indicate configurations, settings, levels of quality (e.g., quality of service (QoS)), and/or other parameter values that a service consumer device may request for a particular MPEG service identified by the transmitted announcements.

In block 1310, the processor of the MPEG service management mobile device may adjust the characteristics of available services based on the received service preference(s) from the service consumer device. For example, the MPEG service management mobile device may store configuration data for a currently available MPEG service and/or generate new MPEG service descriptors for the MPEG service. In some embodiments, instead of proceeding to perform the operations of determination block 1312, the MPEG service management mobile device may return to perform the operations of optional block 1306 in response to performing the adjusting operations of block 1310, such as to transmit messages including newly generated MPEG service descriptors or configuration data reflecting the adjusted characteristics of the available services. In some embodiments, the operations of blocks 1306-1310 may be performed by a service maintenance module executing on the MPEG service management mobile device.

In determination block 1312, the processor of the MPEG service management mobile device may determine whether it has received a service request from the service consumer device for an available service. In response to determining that the MPEG service management mobile device has not received a service request from the service consumer device for an available service (i.e., determination block 1312 = "No"), the MPEG service management mobile device may continue with the operations of block 1302 for registering devices.

In response to determining that the MPEG service management mobile device has received a service request from the service consumer device for an available service (i.e., determination block 1312 = "Yes"), the processor of the MPEG service management mobile device may transmit message(s) establishing the available service associated with MPEG service descriptors for use by service consumer device in block 1314. In some embodiments, the MPEG service management mobile device may generate the MPEG service descriptors in response to receiving the service request (e.g., when the request asks for a generic MPEG service to be established, etc.). In some embodiments, the operations of blocks 1312-1314 may be performed by a service broker module executing on the MPEG service management mobile device.

In determination block 1316, the processor of the MPEG service management mobile device may determine whether message(s) indicating a change in service are received. The MPEG service management mobile device may receive messages from devices that may indicate events have occurred that may cause the MPEG service management mobile device to change available MPEG services. For example, the MPEG service management mobile device may determine it has received "eventing" messages related to the available service that include information about one of more state variables and/or current values of variables related to available service. In response to determining that message(s) have not been received that indicate a change in service (i.e., determination block 1316 = "No"), the MPEG service management mobile device may continue with the operations of determination block 1322 described below.

In response to determining that message(s) have been received that indicate a change in service (i.e., determination block 1316 = "Yes"), the processor of the MPEG service management mobile device may adjust characteristics of the available service based on the received message(s) in block 1318. In block 1320, the processor of the MPEG service management mobile device may transmit message(s) indicating the adjustment of the service associated with new service descriptors for use by devices, such as service consumer device and/or service provider devices associated with the available service. In some embodiments, instead of proceeding to perform the operations of determination block 1322, the MPEG service management mobile device may return to perform the operations of determination block 1316 in response to performing the transmitting operations of block 1320. In some embodiments, the operations of blocks 1316-1320 may be performed by the service maintenance module and/or the service broker module executing on the MPEG service management mobile device.

In determination block 1322, the processor of the MPEG service management mobile device may determine whether a de-registration request related to the service is received, such as from a service consumer device receiving the MPEG service and/or a service provider device contributing to the MPEG service. In response to determining that a de-registration request is not received (i.e., determination block 1322 = "No"), the MPEG service management mobile device may continue with the operations in determination block 1316.

In response to determining that a de-registration request is received (i.e., determination block 1322 = "Yes"), the processor of the MPEG service management mobile device may transmit a de-registration confirmation, such as to the device that transmitted the de-registration request (e.g., a service consumer device, a service provider device, etc.) in block 1324. In block 1326, the processor of the MPEG service management mobile device may deconstruct the service. In some embodiments, the deconstruct operations may be performed in response to the MPEG service management mobile device determining that a time-to-live (TTL) has expired for the service. In some embodiments, the operations of blocks 1322-1326 may be performed by the service maintenance module executing on the MPEG service management mobile device. The MPEG service management mobile device may then continue with the operations in block 1302.

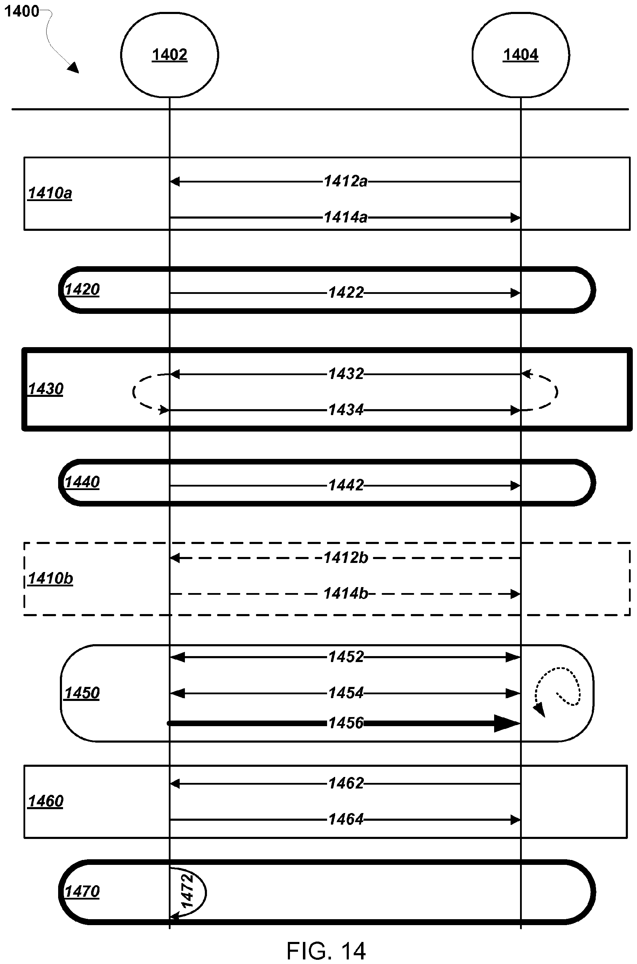

FIG. 14 illustrates a call flow diagram 1400 of signaling between a MPEG service management mobile device 1402 (e.g., a service provider device configured to execute a service directory agent for managing connections/services of the service platform) and a service consumer device 1404 (e.g., a sink device configured to execute a user agent for utilizing the service platform). Such signaling may be used to plan, configure, and report services for streaming media content. For example, the service platform according to the various embodiments may provide a peer-to-peer (P2P) resource-sharing architecture for adapting multimedia services in a heterogeneous networking environment based on signaling between a Miracast Revision-2-enabled smartphone MPEG service management mobile device and a Miracast Revision-2-enabled TV sink device.

FIG. 14 shows the signaling to occur during various phases 1410a, 1420, 1430, 1440, 1410b, 1450, 1460, 1470, representing the general chronological order of operations for establishing media streaming services according to the various embodiments. For example, during a service registration phase 1410a, the service consumer device 1404 may transmit a registration request 1412a to the MPEG service management mobile device 1402 which may respond by transmitting a registration response 1414a to the service consumer device 1404. During a service planning phase 1420 that may be for specifying services required for certain use-cases and/or applications (e.g., specifying use-case/application specifications, etc.), the MPEG service management mobile device 1402 may transmit a service-object announcement 1422 to the service consumer device 1404.

Devices may adapt media and protocols as well as review and negotiate service proposals during a service construction phase 1430. For example, service consumer devices may provide service preference information that allows the MPEG service management mobile device 1402 to adjust services required for particular use-cases/applications used by service consumer devices. Based on such preference information, service construction operations may be performed that allow the MPEG service management mobile device 1402 to negotiate and adapt service(s) required for the user-cases/applications to the specifications preferred by service consumers (e.g., service consumer device 1404). To do so, the service consumer device 1404 may transmit a service-preference and user/user-environment context message 1432 to the MPEG service management mobile device 1402 during the service construction phase 1430. In response, the MPEG service management mobile device 1402 may transmit a service-object announcement 1434 to the service consumer device 1404. In some embodiments, the service consumer device 1404 and MPEG service management mobile device 1402 may repeat such transmissions 1432, 1434 a number of times during the service construction phase 1430.

During a service composition phase 1440, services requested by service consumers may be groomed to form new virtual services, such as by finding individual service providers to provide aspects associated with MPEG service descriptors that may be combined together to form the complete service requested by service consumer devices. To do so, the MPEG service management mobile device 1402 may transmit a service-object announcement 1442 of available services that have been composed. In some embodiments, service-object announcements may include one or more MPEG service descriptors of available services. In some embodiments, available services may or may not be needed to be formed from various service providers.

During an optional service registration phase 1410b, the service consumer device 1404 may transmit a registration request 1412b to the MPEG service management mobile device 1402 which may respond by transmitting a registration response 1414b to the service consumer device 1404. Such registration requests may be necessary in certain circumstances, such as when the MPEG service management mobile device 1402 is configured to review the existence of a requested service, and if the requested service is determined to be absent, request the service to be created (e.g., via a compositor module).

During a service execution phase 1450 associated with operations for using services, managing connections, packet-processing, and controlling rendering (i.e., service maintenance), the MPEG service management mobile device 1402 and service consumer device 1404 may exchange service update signals 1452, service renewal signals 1454, and MPEG-PSI/SI signals 1456 that include MPEG service descriptors that may enable DRM-controlled access to services transported over MPEG-TS.

During a service de-registration phase 1460, the service consumer device 1404 may transmit a de-registration request 1462 to the MPEG service management mobile device 1402, and in response, the MPEG service management mobile device 1402 may de-register the service consumer device 1404 and transmit a de-registration response 1464. During a service deconstruction phase 1470, the MPEG service management mobile device 1402 may perform deconstruction operations 1472 for disabling or otherwise making the service unavailable.

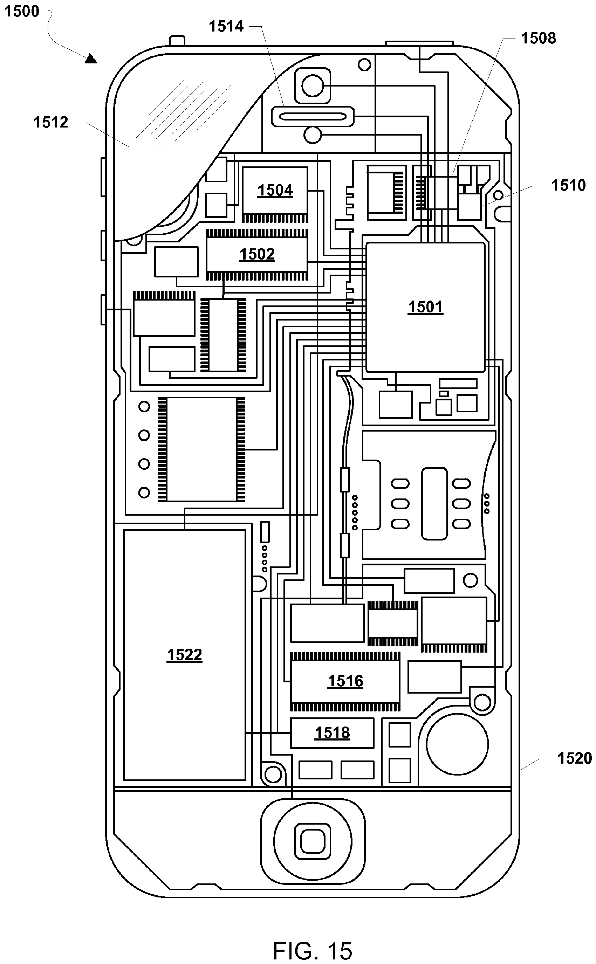

The various embodiments may be implemented in a variety of wireless computing devices, an example of which in the form of a mobile device 1500 is illustrated in FIG. 15. In various embodiments, the mobile device 1500 may include a processor 1501 coupled to a touch screen controller 1504 and an internal memory 1502. The processor 1501 may be one or more multi-core integrated circuits (ICs) designated for general or specific processing tasks. The internal memory 1502 may be volatile or non-volatile memory, and may also be secure and/or encrypted memory, or unsecure and/or unencrypted memory, or any combination thereof. The touch screen controller 1504 and the processor 1501 may also be coupled to a touch screen panel 1512, such as a resistive-sensing touch screen, capacitive-sensing touch screen, infrared sensing touch screen, etc.

The mobile device 1500 may have one or more radio signal transceivers 1508 (e.g., Bluetooth®, ZigBee®, Wi-Fi®, RF radio) and antennae 1510, for sending and receiving, coupled to each other and/or to the processor 1501. The transceivers 1508 and antennae 1510 may be used with the above-mentioned circuitry to implement the various wireless transmission protocol stacks and interfaces. In some embodiments, the mobile device 1500 may include a cellular network wireless modem chip 1516 that enables communication via a cellular network and is coupled to the processor.

The mobile device 1500 may include a peripheral device connection interface 1518 coupled to the processor 1501. The peripheral device connection interface 1518 may be singularly configured to accept one type of connection, or multiply configured to accept various types of physical and communication connections, common or proprietary, such as universal serial bus (USB), Fire Wire, Thunderbolt, or PCIe. The peripheral device connection interface 1518 may also be coupled to a similarly configured peripheral device connection port (not shown).

The mobile device 1500 may also include speakers 1514 for providing audio outputs. The mobile device 1500 may also include a housing 1520, constructed of a plastic, metal, or a combination of materials, for containing all or some of the components discussed herein. The mobile device 1500 may include a power source 1522 coupled to the processor 1501, such as a disposable or rechargeable battery. The rechargeable battery may also be coupled to the peripheral device connection port to receive a charging current from a source external to the mobile device 1500.

The various processors described herein may be any programmable microprocessor, microcomputer or multiple processor chip or chips that can be configured by software instructions (applications) to perform a variety of functions, including the functions of the various embodiments described herein. In the various devices, multiple processors may be provided, such as one processor dedicated to wireless communication functions and one processor dedicated to running other applications. Typically, software applications may be stored in internal memory before they are accessed and loaded into the processors. The processors may include internal memory sufficient to store the application software instructions. In many devices the internal memory may be a volatile or nonvolatile memory, such as flash memory, or a mixture of both. For the purposes of this description, a general reference to memory refers to memory accessible by the processors including internal memory or removable memory plugged into the various devices and memory within the processors.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary embodiments, the functions described may be implemented in hardware, software, firmware, or any combination thereof. If implemented in software, the functions may be stored on or transmitted over as one or more instructions or code on a non-transitory processor-readable, computer-readable, or server-readable medium or a non-transitory processor-readable storage medium. The steps of a method or algorithm disclosed herein may be embodied in a processor-executable software module or processor-executable software instructions which may reside on a non-transitory computer-readable storage medium, a non-transitory server- readable storage medium, and/or a non-transitory processor-readable storage medium. In various embodiments, such instructions may be stored processor-executable instructions or stored processor-executable software instructions. Tangible, non- transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory processor-readable storage medium and/or computer-readable medium, which may be incorporated into a computer program product.

## Claims

1. A method (1100, 1150) for a MPEG service management mobile device to manage services within a wireless-display media-streaming platform, comprising:
storing (1102, 1152), by a processor of the MPEG service management mobile device, a service registry that defines a plurality of service provider devices configured to provide an MPEG service for consumption by a service consumer device, a plurality of the service consumer devices configured to utilize an MPEG service provided by one of the service provider devices, and device capabilities required for a plurality of MPEG services;
discovering (1104, 1154), by the processor of the MPEG service management mobile device, a first set of currently available devices including one or more of the plurality of service provider devices currently available to provide an MPEG service to one of the service consumer devices and one or more of the plurality of service consumer devices currently available to utilize an MPEG service provided by one of the service provider devices;
identifying (1108), by the processor of the MPEG service management mobile device, a first available MPEG service of the plurality of MPEG services based on the first set of currently available devices; and
generating (1110) based on the first available MPEG service, by the processor of the MPEG service management mobile device, a first MPEG service descriptor associated with the identified first available MPEG service.

2. The method of claim 1, further comprising:
discovering, by the processor of the MPEG service management mobile device, a second set of currently available devices;
identifying, by the processor of the MPEG service management mobile device, a second available MPEG service of the plurality of MPEG services based on the second set of currently available devices; and
generating based on the second available MPEG service, by the processor of the MPEG service management mobile device, a second MPEG service descriptor associated with the identified second available MPEG service.

3. The method of claim 1, further comprising:
transmitting (1112), by the processor of the MPEG service management mobile device, a first message that instructs a service provider device associated with the identified first available MPEG service to provide a MPEG transfer stream using the generated first MPEG service descriptor associated with the identified first available MPEG service; and
transmitting (1114), by the processor of the MPEG service management mobile device, a second message that instructs a service consumer device to receive the MPEG transfer stream using the generated first MPEG service descriptor associated with the identified first available MPEG service.

4. The method of claim 1, further comprising:
updating, by the processor of the MPEG service management mobile device, the stored service registry based on the first set of currently available devices.

5. The method of claim 1, further comprising:
launching (1116), by the processor of the MPEG service management mobile device, an application associated with the identified first available MPEG service; or
transmitting, by the processor of the MPEG service management mobile device, an MPEG transfer stream using the generated first MPEG service descriptor.

6. The method of claim 1, further comprising:
receiving (1120), by the processor of the MPEG service management mobile device, an MPEG transfer stream using the generated first MPEG service descriptor; and
rendering (1120), by the processor of the MPEG service management mobile device, the MPEG transfer stream.

7. The method of claim 1, wherein:
the service registry also defines a condition required for each of the plurality of MPEG services to be available,
discovering the first set of currently available devices comprises discovering, by the processor of the MPEG service management mobile device, the first set of currently available devices and a first condition; and
identifying the first available MPEG service of the plurality of MPEG services based on the first set of currently available devices comprises identifying, by the processor of the MPEG service management mobile device, the first available MPEG service of the plurality of MPEG services based on the first set of currently available devices and the first condition.

8. The method of claim 7, wherein the first condition is one or more of a network connectivity, a channel load, an available codec, and a device battery level.

9. The method of claim 1, wherein storing the service registry that defines the plurality of service provider devices, the plurality of service consumer devices, and the device capabilities required for the plurality of MPEG services comprises registering, by the processor of the MPEG service management mobile device, the plurality of service provider devices and the plurality of service consumer devices in response to receiving registration requests from the plurality of service provider devices and the plurality of service consumer devices,
the method further comprising transmitting, by the processor of the MPEG service management mobile device, registration confirmations to the registered plurality of service provider devices and the registered plurality of service consumer devices.

10. The method of claim 1, further comprising:
receiving, by the processor of the MPEG service management mobile device, a service preference for the first available MPEG service from a service consumer device; and
adjusting, by the processor of the MPEG service management mobile device, a characteristic of the first available MPEG service based on the received service preference.

11. The method of claim 1, further comprising:
receiving, by the processor of the MPEG service management mobile device, a service request from a service consumer device for the first available MPEG service; and
transmitting, by the processor of the MPEG service management mobile device, a message establishing the first available MPEG service associated with the first MPEG service descriptor for use by the service consumer device.

12. The method of claim 1, further comprising:
receiving, by the processor of the MPEG service management mobile device, a de-registration request from a service consumer device;
transmitting, by the processor of the MPEG service management mobile device, a de-registration confirmation to the service consumer device in response to receiving the de-registration request; and
deconstructing, by the processor of the MPEG service management mobile device, the first available MPEG service in response to receiving the de-registration request.

13. A non-transitory processor-readable storage medium having stored thereon processor-executable instructions configured to cause a processor of a mobile device to perform a method according to any preceding claim.

14. A mobile device, comprising:
means for storing a service registry that defines a plurality of service provider devices configured to provide an MPEG service for consumption by a service consumer device, a plurality of the service consumer devices configured to utilize an MPEG service provided by one of the service provider devices, and device capabilities required for a plurality of MPEG services;
means for discovering a first set of currently available devices including one or more of the plurality of one or more service provider devices currently available to provide an MPEG service to one of the service consumer devices and one or more of the plurality of service consumer devices that may currently available to utilize an MPEG service provided by one of the service provider devices;
means for identifying a first available MPEG service of the plurality of MPEG services based on the first set of currently available devices; and
means for generating based on the first available MPEG service a first MPEG service descriptor associated with the identified first available MPEG service.

15. A mobile device according to claim 14, further comprising a processor configured with processor-executable instructions to perform a method according to any one of claims 1 to 12.

## Patentansprüche

1. Ein Verfahren (1100, 1150) für eine MPEG-Dienstverwaltungsmobileinrichtung innerhalb einer Drahtlosanzeigemedien-Streaming-Plattform, das Folgendes aufweist:
Speichern (1102, 1152), durch einen Prozessor der MPEG-Dienstverwaltungsmobileinrichtung, einer Dienst-Registry, die Folgendes definiert: eine Vielzahl von Dienstanbietereinrichtungen, die konfiguriert sind zum Vorsehen eines MPEG-Dienstes zur Nutzung durch eine Dienstnutzereinrichtung, eine Vielzahl von Dienstnutzereinrichtungen, die konfiguriert sind zum Verwenden eines MPEG-Dienstes, der durch eine der Dienstanbietereinrichtungen vorgesehen wird und Einrichtungsfähigkeiten, die für eine Vielzahl von MPEG-Diensten erforderlich sind;
Auffinden (1104, 1154), durch den Prozessor der MPEG-Dienstverwaltungsmobileinrichtung, eines ersten Satzes von aktuell verfügbaren Einrichtungen, einschließlich einer oder mehrerer der Vielzahl von Dienstanbietereinrichtungen, die aktuell verfügbar sind, zum Vorsehen eines MPEG-Dienstes an eine der Dienstnutzereinrichtungen und einer oder mehrerer der Vielzahl von Dienstnutzereinrichtungen, die aktuell verfügbar sind zum Verwenden eines MPEG-Dienstes, der durch eine der Dienstanbietereinrichtungen vorgesehen bzw. angeboten wird;
Identifizieren (1108), durch den Prozessor der MPEG-Dienstverwaltungsmobileinrichtung, eines ersten verfügbaren MPEG-Dienstes der Vielzahl von MPEG-Diensten basierend auf dem ersten Satz von aktuell verfügbaren Einrichtungen; und
Generieren (1110), basierend auf dem ersten verfügbaren MPEG-Dienst, durch den Prozessor der MPEG-Dienstverwaltungsmobileinrichtung, eines ersten MPEG-Dienstbeschreibungselementes, das mit dem identifizierten ersten verfügbaren MPEG-Dienst assoziiert ist.

2. Verfahren nach Anspruch 1, das weiter Folgendes aufweist:
Auffinden, durch den Prozessor der MPEG-Dienstverwaltungsmobileinrichtung, eines zweiten Satzes von aktuell verfügbaren Einrichtungen;
Identifizieren, durch den Prozessor der MPEG-Dienstverwaltungsmobileinrichtung, eines zweiten verfügbaren MPEG-Dienstes der Vielzahl von MPEG-Diensten basierend auf dem zweiten Satz aktuell verfügbarer Einrichtungen; und
Generieren, basierend auf dem zweiten verfügbaren MPEG-Dienst, durch den Prozessor der MPEG-Dienstverwaltungsmobileinrichtung, eines zweiten MPEG-Dienstbeschreibungselementes, das mit dem identifizierten zweiten verfügbaren MPEG-Dienst assoziiert ist.

3. Verfahren nach Anspruch 1, das weiter Folgendes aufweist:
Senden (1112), durch den Prozessor der MPEG-Dienstverwaltungsmobileinrichtung, einer ersten Nachricht, die eine Dienstanbietereinrichtung, die mit dem identifizierten ersten verfügbaren MPEG-Dienst assoziiert ist, anweist, einen MPEG-Übertragungsstrom unter Verwendung des generierten ersten MPEG-Dienstbeschreibungselementes, das mit dem identifizierten ersten verfügbaren MPEG-Dienst assoziiert ist, vorzusehen; und
Senden (1114), durch den Prozessor der MPEG-Dienstverwaltungsmobileinrichtung, einer zweiten Nachricht, die eine Dienstnutzereinrichtung anweist, den MPEG-Übertragungsstrom unter Verwendung des generierten ersten MPEG-Dienstbeschreibungselementes, das mit dem identifizierten ersten verfügbaren MPEG-Dienst assoziiert ist, zu empfangen.

4. Verfahren nach Anspruch 1, das weiter Folgendes aufweist:
Aktualisieren, durch den Prozessor der MPEG-Dienstverwaltungsmobileinrichtung, der gespeicherten Dienst-Registry basierend auf dem ersten Satz von aktuell verfügbaren Einrichtungen.

5. Verfahren nach Anspruch 1, das weiter Folgendes aufweist:
Starten (1116), durch den Prozessor der MPEG-Dienstverwaltungsmobileinrichtung, einer Anwendung, die mit dem identifizierten ersten verfügbaren MPEG-Dienst assoziiert ist; oder
Senden, durch den Prozessor der MPEG-Dienstverwaltungsmobileinrichtung, eines MPEG-Übertragungsstroms unter Verwendung des generierten ersten MPEG-Dienstbeschreibungselementes.

6. Verfahren nach Anspruch 1, das weiter Folgendes aufweist:
Empfangen (1120), durch den Prozessor der MPEG-Dienstverwaltungsmobileinrichtung, eines MPEG-Übertragungsstroms unter Verwendung des generierten ersten MPEG-Dienstbeschreibungselementes; und
Rendern (1120), durch den Prozessor der MPEG-Dienstverwaltungsmobileinrichtung, des MPEG-Übertragungsstroms.

7. Verfahren nach Anspruch 1, wobei:
die Dienst-Registry auch eine Bedingung definiert, die für jeden der Vielzahl von MPEG-Diensten erforderlich ist um verfügbar zu sein,
das Auffinden des ersten Satzes von aktuell verfügbaren Einrichtungen Auffinden, durch den Prozessor der MPEG-Dienstverwaltungsmobileinrichtung, des ersten Satzes von aktuell verfügbaren Einrichtungen und einer ersten Bedingung aufweist; und
das Identifizieren des ersten verfügbaren MPEG-Dienstes der Vielzahl von MPEG-Diensten basierend auf dem ersten Satz von aktuell verfügbaren Einrichtungen Identifizieren, durch den Prozessor der MPEG-Dienstverwaltungsmobileinrichtung, des ersten verfügbaren MPEG-Dienstes der Vielzahl von MPEG-Diensten basierend auf dem ersten Satz von aktuell verfügbaren Einrichtungen und der ersten Bedingung aufweist.

8. Verfahren nach Anspruch 7, wobei die erste Bedingung ein oder mehreres von einer Netzwerkkonnektivität, einer Kanallast, einem verfügbaren Codec und einem Einrichtungsbatteriepegel ist.

9. Verfahren nach Anspruch 1, wobei das Speichern der Dienst-Registry, die die Vielzahl von Dienstanbietereinrichtungen, die Vielzahl von Dienstnutzereinrichtungen und die Einrichtungsfähigkeiten, die für die Vielzahl von MPEG-Diensten erforderlich sind, definiert, Registrieren, durch den Prozessor der MPEG-Dienstverwaltungsmobileinrichtung, der Vielzahl von Dienstanbietereinrichtungen und der Vielzahl von Dienstnutzereinrichtungen ansprechend auf Empfangen von Registrierungsanfragen von der Vielzahl von Dienstanbietereinrichtungen und der Vielzahl von Dienstnutzereinrichtungen aufweist,
wobei das Verfahren weiter Senden, durch den Prozessor der MPEG-Dienstverwaltungsmobileinrichtung, von Registrierungsbestätigungen an die registrierte Vielzahl von Dienstanbietereinrichtungen und die registrierte Vielzahl von Dienstnutzereinrichtungen aufweist.

10. Verfahren nach Anspruch 1, das weiter Folgendes aufweist:
Empfangen, durch den Prozessor der MPEG-Dienstverwaltungsmobileinrichtung, einer Dienstpräferenz für den ersten verfügbaren MPEG-Dienst von einer Dienstnutzereinrichtung; und
Anpassen, durch den Prozessor der MPEG-Dienstverwaltungsmobileinrichtung, einer Charakteristik des ersten verfügbaren MPEG-Dienstes basierend auf der empfangenen Dienstpräferenz.

11. Verfahren nach Anspruch 1, das weiter Folgendes aufweist:
Empfangen, durch den Prozessor der MPEG-Dienstverwaltungsmobileinrichtung, einer Dienstanfrage von einer Dienstnutzereinrichtung hinsichtlich des ersten verfügbaren MPEG-Dienstes; und
Senden, durch den Prozessor der MPEG-Dienstverwaltungsmobileinrichtung, einer Nachricht, die den ersten verfügbaren MPEG-Dienst einrichtet, der mit dem ersten MPEG-Dienstbeschreibungselement assoziiert ist, und zwar zur Verwendung durch die Dienstnutzereinrichtung.

12. Verfahren nach Anspruch 1, das weiter Folgendes aufweist:
Empfangen, durch den Prozessor der MPEG-Dienstverwaltungsmobileinrichtung, einer Abmeldungsanfrage von einer Dienstnutzereinrichtung;
Senden, durch den Prozessor der MPEG-Dienstverwaltungsmobileinrichtung, einer Abmeldungsbestätigung an die Dienstnutzereinrichtung ansprechend auf das Empfangen der Abmeldungsanfrage; und
Abbauen, durch den Prozessor der MPEG-Dienstverwaltungsmobileinrichtung, des ersten verfügbaren MPEG-Dienstes ansprechend auf Empfangen der Abmeldungsanfrage.

13. Ein nicht transitorisches prozessorlesbares Speichermedium mit darauf gespeicherten, von einem Prozessor ausführbaren Instruktionen, die konfiguriert sind einen Prozessor einer Mobileinrichtung zu veranlassen ein Verfahren gemäß einem vorhergehenden Anspruch durchzuführen.

14. Eine Mobileinrichtung, die Folgendes aufweist:
Mittel zum Speichern einer Dienst-Registry, die Folgendes definiert: eine Vielzahl von Dienstanbietereinrichtungen, die konfiguriert sind zum Vorsehen eines MPEG-Dienstes zur Nutzung durch eine Dienstnutzereinrichtung, eine Vielzahl von Dienstnutzereinrichtungen, die konfiguriert sind zum Verwenden eines MPEG-Dienstes, der durch eine der Dienstanbietereinrichtungen vorgesehen wird und Einrichtungsfähigkeiten, die für eine Vielzahl von MPEG-Diensten erforderlich sind;
Mittel zum Auffinden eines ersten Satzes von aktuell verfügbaren Einrichtungen, einschließlich einer oder mehrerer der Vielzahl von Dienstanbietereinrichtungen, die aktuell verfügbar sind zum Vorsehen eines MPEG-Dienstes an eine der Dienstnutzereinrichtungen und einer oder mehrerer der Vielzahl von Dienstnutzereinrichtungen, die aktuell verfügbar sind zum Verwenden eines MPEG-Dienstes, der durch eine der Dienstanbietereinrichtungen vorgesehen bzw. angeboten wird;
Mittel zum Identifizieren eines ersten verfügbaren MPEG-Dienstes der Vielzahl von MPEG-Diensten basierend auf dem ersten Satz von aktuell verfügbaren Einrichtungen; und
Mittel zum Generieren, basierend auf dem ersten verfügbaren MPEG-Dienst, eines ersten MPEG-Dienstbeschreibungselementes, das mit dem identifizierten ersten verfügbaren MPEG-Dienst assoziiert ist.

15. Mobileinrichtung nach Anspruch 14, die weiter einen Prozessor aufweist, der mit von einem Prozessor ausführbaren Instruktionen konfiguriert ist zum Durchführen eines Verfahrens gemäß einem der Ansprüche 1 bis 12.

## Revendications

1. Procédé (1100, 1150) permettant à un dispositif mobile de gestion de service MPEG de gérer des services au sein d'une plate-forme de diffusion multimédia d'affichage sans fil, comprenant :
le stockage (1102, 1152), par un processeur du dispositif mobile de gestion de service MPEG, d'un registre de service qui définit une pluralité de dispositifs de fourniture de service configurés pour assurer un service MPEG destiné à être consommé par un dispositif consommateur du service, une pluralité de dispositifs consommateurs du service, configurés pour utiliser un service MPEG fourni par l'un parmi les dispositifs de fourniture du service, ainsi que des capacités de dispositif requises pour une pluralité de services MPEG ;
la découverte (1104, 1154), par le processeur du dispositif mobile de gestion de service MPEG, d'un premier ensemble de dispositifs actuellement disponibles comprenant un ou plusieurs parmi la pluralité de dispositifs de fourniture de service actuellement disponibles pour assurer un service MPEG à destination de l'un parmi les dispositifs consommateurs de service ainsi qu'un ou plusieurs parmi la pluralité de dispositifs consommateurs de service actuellement disponibles pour utiliser un service MPEG assuré par l'un parmi les dispositifs de fourniture de service ;
l'identification (1108) par le processeur du dispositif mobile de gestion de service MPEG, d'un premier service MPEG disponible parmi la pluralité de services MPEG sur la base du premier ensemble de dispositifs actuellement disponibles ; et
la génération (1110) sur la base du premier service MPEG disponible, par le processeur du dispositif mobile de gestion de service MPEG, d'un descripteur du premier service MPEG associé au premier service MPEG disponible identifié.

2. Procédé selon la revendication 1, comprenant en outre :
la découverte, par le processeur du dispositif mobile de gestion de service MPEG, d'un deuxième ensemble de dispositifs actuellement disponibles ;
l'identification, par le processeur du dispositif mobile de gestion de service MPEG, d'un deuxième service MPEG disponible parmi la pluralité de services MPEG, sur la base du deuxième ensemble de dispositifs actuellement disponibles ; et
la génération sur la base du deuxième service MPEG disponible, par le processeur du dispositif mobile de gestion de service MPEG d'un descripteur d'un deuxième service MPEG associé au deuxième service MPEG disponible identifié.

3. Procédé selon la revendication 1, comprenant en outre :
la transmission (1112), par le processeur du dispositif mobile de gestion de service MPEG, d'un premier message qui demande la fourniture, par un dispositif fourniture de service associé au premier service MPEG disponible identifié, d'un flux de transfert MPEG en utilisant le descripteur du premier service MPEG généré associé au premier service MPEG disponible identifié ; et
la transmission (1114), par le processeur du dispositif mobile de gestion de service MPEG, d'un deuxième message qui demande la réception, au niveau d'un dispositif consommateur de service, du flux de transfert MPEG en utilisant le descripteur du premier service MPEG généré associé au premier service MPEG disponible identifié.

4. Procédé selon la revendication 1, comprenant en outre :
la mise à jour, par le processeur du dispositif mobile de gestion de service MPEG, le registre de service stocké sur la base du premier ensemble de dispositifs actuellement disponibles.

5. Procédé selon la revendication 1, comprenant en outre :
le lancement (1116), par le processeur du dispositif mobile de gestion de service MPEG, d'une application associée au premier service MPEG disponible identifié ; ou
la transmission, par le processeur du dispositif mobile de gestion de service MPEG, d'un flux de transfert MPEG en utilisant le descripteur du premier service MPEG généré.

6. Procédé selon la revendication 1, comprenant en outre :
la réception (1120), par le processeur du dispositif mobile de gestion de service MPEG, d'un flux de transfert MPEG généré en utilisant le descripteur du premier service MPEG ; et
le rendu (1120), par le processeur du dispositif mobile de gestion de service MPEG, du flux de transfert MPEG.

7. Procédé selon la revendication 1, dans lequel :
le registre de service définit également une condition nécessaire pour que chacun parmi la pluralité de services MPEG soit accessible,
la découverte du premier ensemble de dispositifs actuellement disponibles comprend la découverte, par le processeur du dispositif mobile de gestion de service MPEG, du premier ensemble de dispositifs actuellement disponibles et une première condition ; et
l'identification du premier service MPEG disponible parmi la pluralité de services MPEG sur la base du premier ensemble de dispositifs actuellement disponibles comprend l'identification, par le processeur du dispositif mobile de gestion de service MPEG, du premier service MPEG parmi la pluralité de services MPEG disponibles, sur la base du premier ensemble de dispositifs actuellement disponibles et la première condition.

8. Procédé selon la revendication 7, dans lequel la première condition est une ou plusieurs parmi une connectivité de réseau, une charge de canal, un codec disponible, et un niveau de batterie du dispositif.

9. Procédé selon la revendication 1, dans lequel le stockage du registre de service qui définit la pluralité de dispositifs de fourniture de service, la pluralité de dispositifs consommateurs de service et les capacités du dispositif nécessaires pour la pluralité de services MPEG comprennent l'enregistrement, par le processeur du dispositif mobile de gestion de service MPEG, de la pluralité de dispositifs de fourniture de service et la pluralité de dispositifs consommateurs de service en réponse à la réception de demandes d'enregistrement à partir de la pluralité de dispositifs de fourniture de service et la pluralité de dispositifs consommateurs de service,
le procédé comprenant en outre la transmission, par le processeur du dispositif mobile de gestion de service MPEG, de confirmations d'enregistrement à la pluralité de dispositifs fourniture de services enregistrés et à la pluralité de dispositifs consommateurs de service enregistrés.

10. Procédé selon la revendication 1, comprenant en outre :
la réception, par le processeur du dispositif mobile de gestion de service MPEG, d'une préférence de service pour le premier service MPEG disponible à partir d'un dispositif consommateur de service ; et
le réglage, par le processeur du dispositif mobile de gestion de service MPEG, d'une caractéristique du premier service MPEG disponible sur la base de la préférence de service reçue.

11. Procédé selon la revendication 1, comprenant en outre :
la réception, par le processeur du dispositif mobile de gestion de service MPEG, d'une demande de service provenant d'un dispositif consommateur de service pour le premier service MPEG disponible ; et
la transmission, par le processeur du dispositif mobile de gestion de service MPEG, d'un message établissant le premier service MPEG disponible associé avec le descripteur du premier service MPEG destiné à être utilisé par le dispositif consommateur du service.

12. Procédé selon la revendication 1, comprenant en outre :
la réception, par le processeur du dispositif mobile de gestion de service MPEG, d'une demande de désenregistrement à partir d'un dispositif consommateur de service ;
la transmission, par le processeur du dispositif mobile de gestion de service MPEG, d'une confirmation du dèsenregistrement à destination du consommateur de service en réponse à la réception de la demande de désenregistrement ; et
la déconstruction, par le processeur du dispositif mobile de gestion de service MPEG, du premier service MPEG disponible en réponse à la réception de la demande de désenregistrement.

13. Support de stockage non transitoire lisible par processeur sur lequel sont stockées des instructions exécutables par processeur configurées pour amener un processeur d'un dispositif mobile à mettre en oeuvre un procédé selon l'une quelconque des revendications précédentes.

14. Un dispositif mobile, comprenant :
des moyens pour le stockage d'un registre de service qui définit une pluralité de dispositifs de fourniture de service configurés pour assurer un service MPEG destiné à être consommé par un dispositif consommateur du service, une pluralité de dispositifs consommateurs du service, configurés pour utiliser un service MPEG fourni par l'un parmi les dispositifs de fourniture du service, ainsi que des capacités de dispositif requis pour une pluralité de services MPEG ;
des moyens pour la découverte d'un premier ensemble de dispositifs actuellement disponibles comprenant un ou plusieurs parmi la pluralité de dispositifs de fourniture de service actuellement disponibles pour assurer un service MPEG à destination de l'un parmi les dispositifs consommateurs de service ainsi qu'un ou plusieurs parmi la pluralité de dispositifs consommateurs de service actuellement disponibles pour utiliser un service MPEG assuré par l'un parmi les dispositifs de fourniture de service ;
des moyens pour l'identification d'un premier service MPEG disponible parmi la pluralité de services MPEG sur la base du premier ensemble de dispositifs actuellement disponibles ; et
des moyens pour la génération, sur la base du premier service MPEG disponible, d'un descripteur du premier service MPEG associé au premier service MPEG disponible identifié.

15. Un dispositif mobile selon la revendication 14, comprenant en outre un processeur configuré avec des instructions exécutables par processeur pour mettre en oeuvre un procédé selon l'une quelconque des revendications 1 à 12.
